(19) Europäisches Patentamt
European Patent Office
Office européen des brevets

(11) **EP 3 836 543 A1**

(12) **EUROPEAN PATENT APPLICATION**
published in accordance with Art. 153(4) EPC

(43) Date of publication:
**16.06.2021 Bulletin 2021/24**

(21) Application number: **19853395.2**

(22) Date of filing: **02.09.2019**

(51) Int Cl.:
*H04N 19/12* [(2014.01)]  *H04N 19/61* [(2014.01)]
*H04N 19/124* [(2014.01)]  *H04N 19/132* [(2014.01)]
*H04N 19/184* [(2014.01)]  *H04N 19/70* [(2014.01)]

(86) International application number:
**PCT/KR2019/011270**

(87) International publication number:
**WO 2020/046091 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **02.09.2018 US 201862726299 P**

(71) Applicant: **LG ELECTRONICS INC.**
**Yeongdeungpo-gu**
**Seoul 07336 (KR)**

(72) Inventors:
• **SALEHIFAR, Mehdi**
  **Seoul 06772 (KR)**
• **KIM, Seunghwan**
  **Seoul 06772 (KR)**
• **KOO, Moonmo**
  **Seoul 06772 (KR)**
• **LIM, Jaehyun**
  **Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **IMAGE CODING METHOD BASED ON MULTIPLE TRANSFORM SELECTION AND DEVICE THEREFOR**

(57)    An image decoding method according to the present invention comprises the steps of: deriving quantized transform coefficients for a current block from a bitstream; deriving transform coefficients by performing inverse quantization on the basis of the quantized transform coefficients; deriving residual samples for the current block by performing inverse transform on the basis of the transform coefficients; and generating a reconstructed picture on the basis of the residual samples, wherein the inverse transform comprises acquiring information relating to multiple transform selection (MTS) from the bitstream, and is performed using a transform kernel set derived on the basis of the information relating to the MTS.

FIG. 14

**Description**

**BACKGROUND OF THE DISCLOSURE**

Field of the disclosure

The present disclosure relates to a video coding technique and, more particularly, to a video coding method based on a multiple transform selection in a video coding system and the apparatus for the same.

Related Art

The demands for high-resolution and high-quality images and video, such as an ultra high definition (UHD) image and video of 4K or 8K or more, are recently increasing in various fields. As image and video data become high resolution and high quality, the amount of information or the number of bits that is relatively transmitted is increased compared to the existing image and video data. Accordingly, if image data is transmitted using a medium, such as the existing wired or wireless wideband line, or image and video data are stored using the existing storage medium, transmission costs and storage costs are increased.

Furthermore, interests and demands for immersive media, such as virtual reality (VR), artificial reality (AR) content or a hologram, are recently increasing. The broadcasting of an image and video having image characteristics different from those of real images, such as game images, is increasing.

Accordingly, there is a need for a high-efficiency image and video compression technology in order to effectively compress and transmit or store and playback information of high-resolution and high-quality images and video having such various characteristics.

**SUMMARY**

The present disclosure provides a method and apparatus for increasing a video coding efficiency.

The present disclosure also provides a method and apparatus for increasing a transform efficiency.

The present disclosure also provides a video coding method and apparatus based on a Multiple Transform Selection.

The present disclosure also provides a method and apparatus for coding information for a Multiple Transform Selection which can increase a coding efficiency.

In an aspect, an image decoding method performed by a decoding apparatus is provided. The method includes deriving quantized transform coefficients for a current block from a bitstream, deriving transform coefficients by performing a dequantization based on the quantized transform coefficients, deriving residual samples for the current block by performing an inverse transform based on the transform coefficients, and generating a reconstructed picture based on the residual samples, wherein the inverse transform is performed by obtaining information for Multiple Transform Selection (MTS) from the bitstream and using a transform kernel set derived based on the information for MTS.

In other aspect, an image encoding method performed by an encoding apparatus is provided. The method includes deriving residual samples for a current block, deriving transform coefficients for the current block by performing a transform based on the residual samples, deriving quantized transform coefficients by performing a quantization based on the transform coefficients, generating residual information based on the quantized transform coefficients, and encoding image information including the residual information, wherein the transform is performed by using a transform kernel set applied to the current block, wherein information for Multiple Transform Selection (MTS) that represents the transform kernel set is generated, and wherein the information for MTS is included in the image information.

According to the present disclosure, overall compression efficiency of image/video can be improved.

According to the present disclosure, an amount of data to be transmitted for a residual process can be reduced through an efficient transform, and a residual coding efficiency can be improved.

According to the present disclosure, in applying a Multiple Transform Selection, different transform kernels can be applied to horizontal and vertical directions according to a transform efficiency, and an overall coding rate can be improved.

**BRIEF DESCRIPTION OF THE DRAWINGS**

FIG. 1 schematically illustrates an example of a video/image coding system to which embodiments of this document may be applied.

FIG. 2 is a schematic diagram illustrating a configuration of a video/image encoding apparatus to which the embodiment(s) of the present document may be applied.

FIG. 3 is a schematic diagram illustrating a configuration of a video/image decoding apparatus to which the embodiment(s) of the present document may be applied.

FIG. 4 schematically represents a multiple transform technique according to the present disclosure.

FIG. 5 is a flowchart illustrating a process of determining a transform combination according to whether the multiple transform selection (MTS or EMT) is applied according to an embodiment of the present disclosure.

FIGS. 6 and 7 are diagrams for describing the non-separable secondary transform (NSST) according to an embodiment of the present disclosure.

FIGS. 8 and 9 are diagrams for describing the RST according to an embodiment of the present disclosure.

FIG. 10 represents three forward scan orders that can be applied to a 4x4 transform coefficient or a transform coefficient block (4x4 block, Coefficient Group (CG)) applied in the HEVC standard.

FIGS. 11 and 12 are diagrams illustrating a mapping of transform coefficients according to a diagonal scanning order according to an embodiment of the present disclosure.

FIG. 13 is a flowchart schematically illustrating a video/image encoding method by an encoding apparatus according to an embodiment of the present disclosure.

FIG. 14 is a flowchart schematically illustrating a video/image decoding method by a decoding apparatus according to an embodiment of the present disclosure.

FIG. 15 illustrates an example of a content streaming system to which embodiments disclosed in this document may be applied.

## DESCRIPTION OF EXEMPLARY EMBODIMENTS

This document may be modified in various ways and may have various embodiments, and specific embodiments will be illustrated in the drawings and described in detail. However, this does not intend to limit this document to the specific embodiments. Terms commonly used in this specification are used to describe a specific embodiment and is not used to limit the technical spirit of this document. An expression of the singular number includes plural expressions unless evidently expressed otherwise in the context. A term, such as "include" or "have" in this specification, should be understood to indicate the existence of a characteristic, number, step, operation, element, part, or a combination of them described in the specification and not to exclude the existence or the possibility of the addition of one or more other characteristics, numbers, steps, operations, elements, parts or a combination of them.

Meanwhile, elements in the drawings described in this document are independently illustrated for convenience of description related to different characteristic functions. This does not mean that each of the elements is implemented as separate hardware or separate software. For example, at least two of elements may be combined to form a single element, or a single element may be divided into a plurality of elements. An embodiment in which elements are combined and/or separated is also included in the scope of rights of this document unless it deviates from the essence of this document.

Hereinafter, preferred embodiments of this document are described more specifically with reference to the accompanying drawings. Hereinafter, in the drawings, the same reference numeral is used in the same element, and a redundant description of the same element may be omitted.

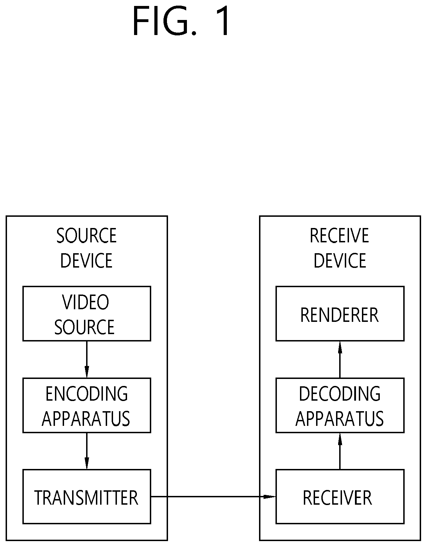

FIG. 1 schematically illustrates an example of a video/image coding system to which embodiments of this document may be applied.

Referring to Fig. 1, a video/image coding system may include a first device (a source device) and a second device (a receiving device). The source device may deliver encoded video/image information or data in the form of a file or streaming to the receiving device via a digital storage medium or network.

The source device may include a video source, an encoding apparatus, and a transmitter. The receiving device may include a receiver, a decoding apparatus, and a renderer. The encoding apparatus may be called a video/image encoding apparatus, and the decoding apparatus may be called a video/image decoding apparatus. The transmitter may be included in the encoding apparatus. The receiver may be included in the decoding apparatus. The renderer may include a display, and the display may be configured as a separate device or an external component.

The video source may acquire video/image through a process of capturing, synthesizing, or generating the video/image. The video source may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding apparatus may encode input video/image. The encoding apparatus may perform a series of procedures such as prediction, transform, and quantization for compression and coding efficiency. The encoded data (encoded video/image information) may be output in the form of a bitstream.

The transmitter may transmit the encoded image/image information or data output in the form of a bitstream to the receiver of the receiving device through a digital storage medium or a network in the form of a file or streaming. The digital storage medium may include various storage mediums such as USB, SD, CD, DVD, Blu-ray, HDD, SSD, and the like. The transmitter may include an element for generating a media file through a predetermined file format and may include an element for transmission through a broadcast/communication network. The receiver may receive/extract the bitstream and transmit the received bitstream to the decoding apparatus.

The decoding apparatus may decode the video/image by performing a series of procedures such as dequantization, inverse transform, and prediction corresponding to the operation of the encoding apparatus.

The renderer may render the decoded video/image. The rendered video/image may be displayed through the display.

This document relates to video/image coding. For example, the methods/embodiments disclosed in this document may be applied to a method disclosed in the versatile video coding (VVC), the EVC (essential video coding) standard, the AOMedia Video 1 (AV1) standard, the 2nd generation of audio video coding standard (AVS2), or the next generation video/image coding standard (ex. H.267 or H.268, etc.).

This document presents various embodiments of video/image coding, and the embodiments may be performed in combination with each other unless otherwise mentioned.

In this document, video may refer to a series of images over time. Picture generally refers to a unit representing one image in a specific time zone, and a slice/tile is a unit constituting part of a picture in coding. The slice/tile may include one or more coding tree units (CTUs). One picture may consist of one or more slices/tiles. One picture may consist of one or more tile groups. One tile group may include one or more tiles. A brick may represent a rectangular region of CTU rows within a tile in a picture. A tile may be partitioned into multiple bricks, each of which consisting of one or more CTU rows within the tile. A tile that is not partitioned into multiple bricks may be also referred to as a brick. A brick scan is a specific sequential ordering of CTUs partitioning a picture in which the CTUs are ordered consecutively in CTU raster scan in a brick, bricks within a tile are ordered consecutively in a raster scan of the bricks of the tile, and tiles in a picture are ordered consecutively in a raster scan of the tiles of the picture. A tile is a rectangular region of CTUs within a particular tile column and a particular tile row in a picture. The tile column is a rectangular region of CTUs having a height equal to the height of the picture and a width specified by syntax elements in the picture parameter set. The tile row is a rectangular region of CTUs having a height specified by syntax elements in the picture parameter set and a width equal to the width of the picture. A tile scan is a specific sequential ordering of CTUs partitioning a picture in which the CTUs are ordered consecutively in CTU raster scan in a tile whereas tiles in a picture are ordered consecutively in a raster scan of the tiles of the picture. A slice includes an integer number of bricks of a picture that may be exclusively contained in a single NAL unit. A slice may consists of either a number of complete tiles or only a consecutive sequence of complete bricks of one tile. Tile groups and slices may be used interchangeably in this document. For example, in this document, a tile group/tile group header may be called a slice/slice header.

A pixel or a pel may mean a smallest unit constituting one picture (or image). Also, 'sample' may be used as a term corresponding to a pixel. A sample may generally represent a pixel or a value of a pixel, and may represent only a pixel/pixel value of a luma component or only a pixel/pixel value of a chroma component.

A unit may represent a basic unit of image processing. The unit may include at least one of a specific region of the picture and information related to the region. One unit may include one luma block and two chroma (ex. cb, cr) blocks. The unit may be used interchangeably with terms such as block or area in some cases. In a general case, an $M \times N$ block may include samples (or sample arrays) or a set (or array) of transform coefficients of M columns and N rows.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C."

Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

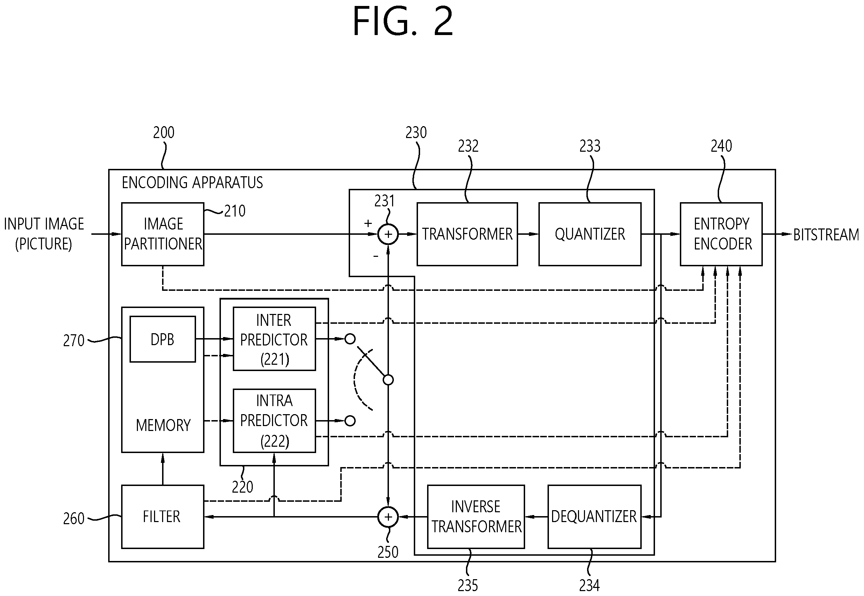

Fig. 2 is a schematic diagram illustrating a configuration of a video/image encoding apparatus to which the embodiment(s) of the present document may be applied. Hereinafter, the video encoding apparatus may include an image encoding apparatus.

Referring to Fig. 2, the encoding apparatus 200 includes an image partitioner 210, a predictor 220, a residual processor 230, and an entropy encoder 240, an adder 250, a filter 260, and a memory 270. The predictor 220 may include an inter predictor 221 and an intra predictor 222. The residual processor 230 may include a transformer 232, a quantizer 233, a dequantizer 234, and an inverse transformer 235. The residual processor 230 may further include a subtractor 231. The adder 250 may be called a reconstructor or a reconstructed block generator. The image partitioner 210, the predictor 220, the residual processor 230, the entropy encoder 240, the adder 250, and the filter 260 may be configured by at least one hardware component (ex. an encoder chipset or processor) according to an embodiment. In addition, the memory 270 may include a decoded picture buffer (DPB) or may be configured by a digital storage medium. The hardware component may further include the memory 270 as an internal/external component.

The image partitioner 210 may partition an input image (or a picture or a frame) input to the encoding apparatus 200 into one or more processors. For example, the processor may be called a coding unit (CU). In this case, the coding unit may be recursively partitioned according to a quad-tree binary-tree ternary-tree (QTBTTT) structure from a coding tree unit (CTU) or a largest coding unit (LCU). For example, one coding unit may be partitioned into a plurality of coding units of a deeper depth based on a quad tree structure, a binary tree structure, and/or a ternary structure. In this case, for example, the quad tree structure may be applied first and the binary tree structure and/or ternary structure may be applied later. Alternatively, the binary tree structure may be applied first. The coding procedure according to this document may be performed based on the final coding unit that is no longer partitioned. In this case, the largest coding unit may be used as the final coding unit based on coding efficiency according to image characteristics, or if necessary, the coding unit may be recursively partitioned into coding units of deeper depth and a coding unit having an optimal size may be used as the final coding unit. Here, the coding procedure may include a procedure of prediction, transform, and reconstruction, which will be described later. As another example, the processor may further include a prediction unit (PU) or a transform unit (TU). In this case, the prediction unit and the transform unit may be split or partitioned from the aforementioned final coding unit. The prediction unit may be a unit of sample prediction, and the transform unit may be a unit for deriving a transform coefficient and/or a unit for deriving a residual signal from the transform coefficient.

The unit may be used interchangeably with terms such as block or area in some cases. In a general case, an M×N block may represent a set of samples or transform coefficients composed of M columns and N rows. A sample may generally represent a pixel or a value of a pixel, may represent only a pixel/pixel value of a luma component or represent only a pixel/pixel value of a chroma component. A sample may be used as a term corresponding to one picture (or image) for a pixel or a pel.

In the encoding apparatus 200, a prediction signal (predicted block, prediction sample array) output from the inter predictor 221 or the intra predictor 222 is subtracted from an input image signal (original block, original sample array) to generate a residual signal residual block, residual sample array), and the generated residual signal is transmitted to the transformer 232. In this case, as shown, a unit for subtracting a prediction signal (predicted block, prediction sample array) from the input image signal (original block, original sample array) in the encoder 200 may be called a subtractor 231. The predictor may perform prediction on a block to be processed (hereinafter, referred to as a current block) and generate a predicted block including prediction samples for the current block. The predictor may determine whether intra prediction or inter prediction is applied on a current block or CU basis. As described later in the description of each prediction mode, the predictor may generate various information related to prediction, such as prediction mode information, and transmit the generated information to the entropy encoder 240. The information on the prediction may be encoded in the entropy encoder 240 and output in the form of a bitstream.

The intra predictor 222 may predict the current block by referring to the samples in the current picture. The referred samples may be located in the neighborhood of the current block or may be located apart according to the prediction mode. In the intra prediction, prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra predictor 222 may determine the prediction mode applied to the current block by using a prediction mode applied to a neighboring block.

The inter predictor 221 may derive a predicted block for the current block based on a reference block (reference sample array) specified by a motion vector on a reference picture. Here, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like, and the reference picture including the temporal neighboring block may be called a collocated picture (colPic). For example, the inter predictor 221 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter predictor 221 may use motion information of the neighboring block as motion information of the current block. In the skip mode, unlike the merge mode, the residual signal may not be transmitted. In the case of the motion vector prediction (MVP) mode, the motion vector of the neighboring block may be used as a motion vector predictor and the motion vector of the current block may be indicated by signaling a motion vector difference.

The predictor 220 may generate a prediction signal based on various prediction methods described below. For example, the predictor may not only apply intra prediction or inter prediction to predict one block but also simultaneously apply both intra prediction and inter prediction. This may be called combined inter and intra prediction (CIIP). In addition, the predictor may be based on an intra block copy (IBC) prediction mode or a palette mode for prediction of a block. The IBC prediction mode or palette mode may be used for content image/video coding of a game or the like, for example, screen content coding (SCC). The IBC basically performs prediction in the current picture but may be performed similarly to inter prediction in that a reference block is derived in the current picture. That is, the IBC may use at least one of the inter prediction techniques described in this document. The palette mode may be considered as an example of intra coding or intra prediction. When the palette mode is applied, a sample value within a picture may be signaled based on information on the palette table and the palette index.

The prediction signal generated by the predictor (including the inter predictor 221 and/or the intra predictor 222) may be used to generate a reconstructed signal or to generate a residual signal. The transformer 232 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform generated based on a prediction signal generated using all previously reconstructed pixels. In addition, the transform process may be applied to square pixel blocks having the same size or may be applied to blocks having a variable size rather than square.

The quantizer 233 may quantize the transform coefficients and transmit them to the entropy encoder 240 and the entropy encoder 240 may encode the quantized signal (information on the quantized transform coefficients) and output a bitstream. The information on the quantized transform coefficients may be referred to as residual information. The quantizer 233 may rearrange block type quantized transform coefficients into a one-dimensional vector form based on a coefficient scanning order and generate information on the quantized transform coefficients based on the quantized transform coefficients in the one-dimensional vector form. Information on transform coefficients may be generated. The entropy encoder 240 may perform various encoding methods such as, for example, exponential Golomb, context-adaptive variable length coding (CAVLC), context-adaptive binary arithmetic coding (CABAC), and the like. The entropy encoder 240 may encode information necessary for video/image reconstruction other than quantized transform coefficients (ex. values of syntax elements, etc.) together or separately. Encoded information (ex. encoded video/image information) may be transmitted or stored in units of NALs (network abstraction layer) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. In this document, information and/or syntax elements transmitted/signaled from the encoding apparatus to the decoding apparatus may be included in video/picture information. The video/image information may be encoded through the above-described encoding procedure and included in the bitstream. The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 240 and/or a storage unit (not shown) storing the signal may be included as internal/external element of the encoding apparatus 200, and alternatively, the transmitter may be included in the entropy encoder 240.

The quantized transform coefficients output from the quantizer 233 may be used to generate a prediction signal. For example, the residual signal (residual block or residual samples) may be reconstructed by applying dequantization and inverse transform to the quantized transform coefficients through the dequantizer 234 and the inverse transformer 235. The adder 250 adds the reconstructed residual signal to the prediction signal output from the inter predictor 221 or the intra predictor 222 to generate a reconstructed signal (reconstructed picture, reconstructed block, reconstructed sample array). If there is no residual for the block to be processed, such as a case where the skip mode is applied, the predicted block may be used as the reconstructed block. The adder 250 may be called a reconstructor or a reconstructed block generator. The generated reconstructed signal may be used for intra prediction of a next block to be processed in the current picture and may be used for inter prediction of a next picture through filtering as described below.

Meanwhile, luma mapping with chroma scaling (LMCS) may be applied during picture encoding and/or reconstruction.

The filter 260 may improve subjective/objective image quality by applying filtering to the reconstructed signal. For example, the filter 260 may generate a modified reconstructed picture by applying various filtering methods to the reconstructed picture and store the modified reconstructed picture in the memory 270, specifically, a DPB of the memory 270. The various filtering methods may include, for example, deblocking filtering, a sample adaptive offset, an adaptive loop filter, a bilateral filter, and the like. The filter 260 may generate various information related to the filtering and transmit the generated information to the entropy encoder 240 as described later in the description of each filtering method. The information related to the filtering may be encoded by the entropy encoder 240 and output in the form of a bitstream.

The modified reconstructed picture transmitted to the memory 270 may be used as the reference picture in the inter predictor 221. When the inter prediction is applied through the encoding apparatus, prediction mismatch between the encoding apparatus 200 and the decoding apparatus may be avoided and encoding efficiency may be improved.

The DPB of the memory 270 DPB may store the modified reconstructed picture for use as a reference picture in the inter predictor 221. The memory 270 may store the motion information of the block from which the motion information in the current picture is derived (or encoded) and/or the motion information of the blocks in the picture that have already been reconstructed. The stored motion information may be transmitted to the inter predictor 221 and used as the motion information of the spatial neighboring block or the motion information of the temporal neighboring block. The memory 270 may store reconstructed samples of reconstructed blocks in the current picture and may transfer the reconstructed samples to the intra predictor 222.

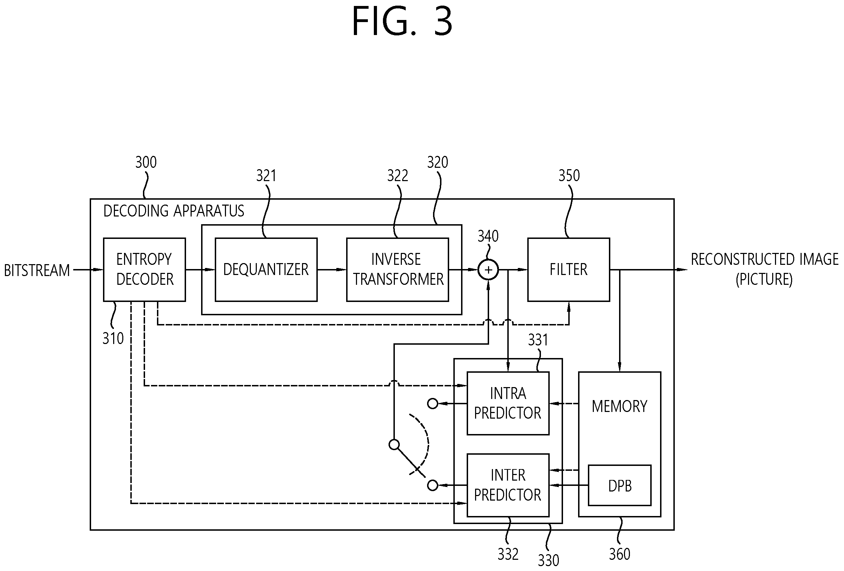

Fig. 3 is a schematic diagram illustrating a configuration of a video/image decoding apparatus to which the embodiment(s) of the present document may be applied.

Referring to Fig. 3, the decoding apparatus 300 may include an entropy decoder 310, a residual processor 320, a predictor 330, an adder 340, a filter 350, a memory 360. The predictor 330 may include an inter predictor 331 and an intra predictor 332. The residual processor 320 may include a dequantizer 321 and an inverse transformer 321. The entropy decoder 310, the residual processor 320, the predictor 330, the adder 340, and the filter 350 may be configured by a hardware component (ex. a decoder chipset or a processor) according to an embodiment. In addition, the memory 360 may include a decoded picture buffer (DPB) or may be configured by a digital storage medium. The hardware component may further include the memory 360 as an internal/external component.

When a bitstream including video/image information is input, the decoding apparatus 300 may reconstruct an image corresponding to a process in which the video/image information is processed in the encoding apparatus of Fig. 2. For example, the decoding apparatus 300 may derive units/blocks based on block partition related information obtained from the bitstream. The decoding apparatus 300 may perform decoding using a processor applied in the encoding apparatus. Thus, the processor of decoding may be a coding unit, for example, and the coding unit may be partitioned according to a quad tree structure, binary tree structure and/or ternary tree structure from the coding tree unit or the largest coding unit. One or more transform units may be derived from the coding unit. The reconstructed image signal decoded and output through the decoding apparatus 300 may be reproduced through a reproducing apparatus.

The decoding apparatus 300 may receive a signal output from the encoding apparatus of Fig. 2 in the form of a bitstream, and the received signal may be decoded through the entropy decoder 310. For example, the entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The decoding apparatus may further decode picture based on the information on the parameter set and/or the general constraint information. Signaled/received information and/or syntax elements described later in this document may be decoded may decode the decoding procedure and obtained from the bitstream. For example, the entropy decoder 310 decodes the information in the bitstream based on a coding method such as exponential Golomb coding, CAVLC, or CABAC, and output syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a decoding target block or information of a symbol/bin decoded in a previous stage, and perform an arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 310 may be provided to the predictor (the inter predictor 332 and the intra predictor 331), and the residual value on which the entropy decoding was performed in the entropy decoder 310, that is, the quantized transform coefficients and related parameter information, may be input to the residual processor 320. The residual processor 320 may derive the residual signal (the residual block, the residual samples, the residual sample array). In addition, information on filtering among information decoded by the entropy decoder 310 may be provided to the filter 350. Meanwhile, a receiver (not shown) for receiving a signal output from the encoding apparatus may be further configured as an internal/external element of the decoding apparatus 300, or the receiver may be a component of the entropy decoder 310. Meanwhile, the decoding apparatus according to this document may be referred to as a video/image/picture decoding apparatus, and the decoding apparatus may be classified into an information decoder (video/image/picture information decoder) and a sample decoder (video/image/picture sample decoder). The information decoder may include the entropy decoder 310, and the sample decoder may include at least one of the dequantizer 321, the inverse transformer 322, the adder 340, the filter 350, the memory 360, the inter predictor 332, and the intra predictor 331.

The dequantizer 321 may dequantize the quantized transform coefficients and output the transform coefficients. The dequantizer 321 may rearrange the quantized transform coefficients in the form of a two-dimensional block form. In this case, the rearrangement may be performed based on the coefficient scanning order performed in the encoding apparatus. The dequantizer 321 may perform dequantization on the quantized transform coefficients by using a quantization parameter (ex. quantization step size information) and obtain transform coefficients.

The inverse transformer 322 inversely transforms the transform coefficients to obtain a residual signal (residual block, residual sample array).

The predictor may perform prediction on the current block and generate a predicted block including prediction samples for the current block. The predictor may determine whether intra prediction or inter prediction is applied to the current block based on the information on the prediction output from the entropy decoder 310 and may determine a specific intra/inter prediction mode.

The predictor 320 may generate a prediction signal based on various prediction methods described below. For example, the predictor may not only apply intra prediction or inter prediction to predict one block but also simultaneously apply intra prediction and inter prediction. This may be called combined inter and intra prediction (CIIP). In addition, the predictor may be based on an intra block copy (IBC) prediction mode or a palette mode for prediction of a block. The IBC prediction mode or palette mode may be used for content image/video coding of a game or the like, for example, screen content coding (SCC). The IBC basically performs prediction in the current picture but may be performed similarly to inter prediction in that a reference block is derived in the current picture. That is, the IBC may use at least one of the inter prediction techniques described in this document. The palette mode may be considered as an example of intra coding or intra prediction. When the palette mode is applied, a sample value within a picture may be signaled based on information on the palette table and the palette index.

The intra predictor 331 may predict the current block by referring to the samples in the current picture. The referred samples may be located in the neighborhood of the current block or may be located apart according to the prediction mode. In the intra prediction, prediction modes may include a plurality of non-directional modes and a plurality of directional modes. The intra predictor 331 may determine the prediction mode applied to the current block by using a prediction mode applied to a neighboring block.

The inter predictor 332 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 332 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 340 may generate a reconstructed signal (reconstructed picture, reconstructed block, reconstructed sample array) by adding the obtained residual signal to the prediction signal (predicted block, predicted sample array) output from the predictor (including the inter predictor 332 and/or the intra predictor 331). If there is no residual for the block to be processed, such as when the skip mode is applied, the predicted block may be used as the reconstructed block.

The adder 340 may be called reconstructor or a reconstructed block generator. The generated reconstructed signal may be used for intra prediction of a next block to be processed in the current picture, may be output through filtering as described below, or may be used for inter prediction of a next picture.

Meanwhile, luma mapping with chroma scaling (LMCS) may be applied in the picture decoding process.

The filter 350 may improve subjective/objective image quality by applying filtering to the reconstructed signal. For example, the filter 350 may generate a modified reconstructed picture by applying various filtering methods to the reconstructed picture and store the modified reconstructed picture in the memory 360, specifically, a DPB of the memory 360. The various filtering methods may include, for example, deblocking filtering, a sample adaptive offset, an adaptive loop filter, a bilateral filter, and the like.

The (modified) reconstructed picture stored in the DPB of the memory 360 may be used as a reference picture in the inter predictor 332. The memory 360 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 360 may store reconstructed samples of reconstructed blocks in the current picture and transfer the reconstructed samples to the intra predictor 331.

In the present disclosure, the embodiments described in the filter 260, the inter predictor 221, and the intra predictor 222 of the encoding apparatus 200 may be the same as or respectively applied to correspond to the filter 350, the inter predictor 332, and the intra predictor 331 of the decoding apparatus 300. The same may also apply to the unit 332 and the intra predictor 331.

As described above, in performing video coding, a prediction is performed to enhance compression efficiency. A predicted block including prediction samples for a current block, that is, a target coding block, can be generated through the prediction. In this case, the predicted block includes the prediction samples in a spatial domain (or pixel domain). The predicted block is identically derived in the encoding apparatus and the decoding apparatus. The encoding apparatus can enhance image coding efficiency by signaling, to the decoding apparatus, information on a residual (residual information) between the original block not an original sample value itself of the original block and the predicted block. The decoding apparatus may derive a residual block including residual samples based on the residual information, may generate a reconstructed including reconstructed samples by adding the residual block and the predicted block, and may generate a reconstructed picture including the reconstructed blocks.

The residual information may be generated through a transform and quantization procedure. For example, the encoding apparatus may derive the residual block between the original block and the predicted block, may derive transform coefficients by performing a transform procedure on the residual samples (residual sample array) included in the residual block, may derive quantized transform coefficients by performing a quantization procedure on the transform coefficients, and may signal related residual information to the decoding apparatus (through a bitstream). In this case, the residual information may include information, such as value information, location information, transform scheme, transform kernel, and quantization parameter of the quantized transform coefficients. The decoding apparatus may perform a dequantization/inverse transform procedure based on the residual information, and may derive residual samples (or residual block). The decoding apparatus may generate a reconstructed picture based on the predicted block and the residual block. Furthermore, the encoding apparatus may derive a residual block by dequantizing/inverse-transforming the quantized transform coefficients for reference to the inter prediction of a subsequent picture, and may generate a reconstructed picture.

Meanwhile, according to the present disclosure, in performing the transform, a vertical component and a horizontal component may be separated and transformed. In this case, a transform kernel for a vertical direction and a transform kernel for a horizontal direction may be separately selected. This may be referred to as multiple transform selection (MTS).

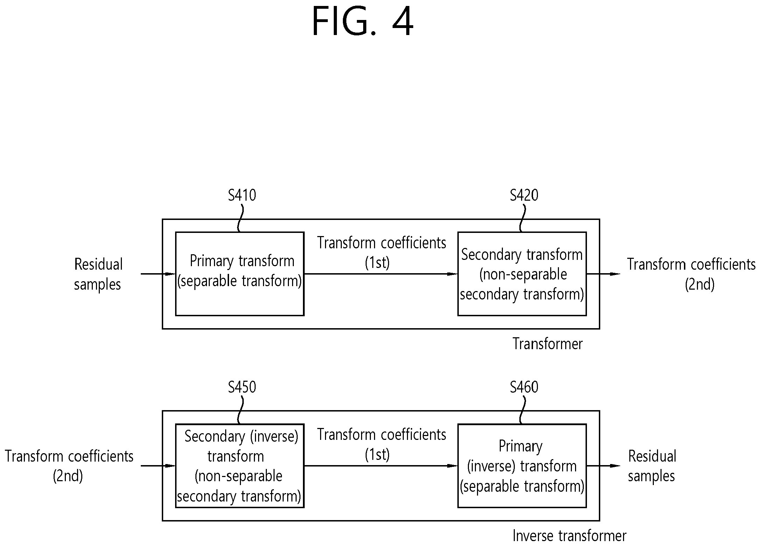

FIG. 4 schematically represents a multiple transform technique according to the present disclosure.

Referring to FIG. 4, a transformer may correspond to the transformer in the encoding apparatus of foregoing FIG. 2, and an inverse transformer may correspond to the inverse transformer in the encoding apparatus of foregoing FIG. 2, or to the inverse transformer in the decoding apparatus of FIG. 3.

The transformer may derive (primary) transform coefficients by performing a primary transform based on residual samples (residual sample array) in a residual block (S410). This primary transform may be referred to as a core transform. Herein, the primary transform may be based on multiple transform selection (MTS), and when a multiple transform is applied as the primary transform, it may be referred to as a multiple core transform.

The transformer may derive (secondary) transform coefficients by performing a secondary transform based on (primary) transform coefficients (step, S420). The (secondary) transform coefficients may be called modified transform coefficients.

The primary transform means a transform from a space domain to a frequency domain, and the secondary transform means a transform into a more compressed expression by using a correlation existed between the (primary) transform coefficients. Here, the secondary transform may include a non-separable transform. In this case, the secondary transform may be called a non-separable secondary transform (NSST) or a reduced secondary transform (RST).

Since the secondary transform is performed to further increase a transform performance, the transformer may perform the secondary transform selectively. The embodiment shown in Fig. 4 is described based on the situation in which the secondary (inverse) transform is performed, but the secondary transform may be omitted.

The transformer may transfer the (secondary) transform coefficients derived by performing the secondary transform to the quantizer. The quantizer may derive quantized transform coefficients by performing quantization to the (secondary) transform coefficients. Furthermore, the quantized transform coefficients may be encoded and signaled to the decoding apparatus, and further, transferred to the dequantizer/inverse transformer in the encoding apparatus.

In the case that the secondary transform is omitted, the (primary) transform coefficients, which are outputs of the primary transform, may be derived as the quantized transform coefficients through the quantizer. In addition, the quantized transform coefficients may be encoded and signaled to the decoding apparatus, and further, transferred to the dequantizer/inverse transformer in the encoding apparatus.

The dequantizer may perform a series of processes in the inverse order of the procedure performed in the transformer described above. The dequantizer may receive (dequantized) transform coefficients and derive (primary) transform coefficients (step, S450) by performing the secondary (inverse) transform and obtain a residual block (residual samples) by performing the primary (inverse) transform.

Here, the primary transform coefficients may be called modified transform coefficients in the aspect of the inverse transformer. The encoding apparatus and the decoding apparatus may generate a reconstructed block based on the residual block and the predicted block, and based on the reconstructed block, may generate a reconstructed picture, as described above.

In the case that the secondary (inverse) transform is omitted, the inverse transformer may receive (dequantized) transform coefficients and obtain a residual block (residual samples) by performing the primary inverse transform. The encoding apparatus and the decoding apparatus may generate a reconstructed block based on the residual block and the predicted block, and based on it, may generate a reconstructed picture, as described above.

Meanwhile, as described above, a multiple transform selection may be applied to the primary transform. In this case, the primary transform (multiple core transform) may represent the scheme of transform by using DCT (Discrete Cosine Transform) and/or DST (Discrete Sine Transform) transform type. In one embodiment, DCT type 2 may be applied to the multiple transform selection, or DCT type 7 may be applied by limiting a specific case. For example, DCT type 7 may be applied only in a specific case such as 4X4 block in an intra-prediction mode. In another embodiment, Explicit Multiple Transform (EMT) may be applied to the multiple transform selection, and in this case, a combination of several transforms may be applied. For example, a combination of transform types such as DST type 7 (DST7), DCT type 8 (DCT8), DST type 1 (DST1), DCT type 5 (DCT5), and DCT type 2 (DCT2) may be used.

Table 1 and Table 2 below represent a combination of transforms used in the multiple core transform (explicit multiple transform) exemplarily. Table 1 represents combinations of multiple core transforms which are applied in an intra-prediction mode, and Table 2 represents combinations of multiple core transforms which are applied in an inter-prediction mode.

[Table 1]

| Set | Idx. | Hor. | Ver. | Intra pred. mode |
|---|---|---|---|---|
| Set 0 | 0 | DST-7 | DST-7 | 0 |
| | 1 | DCT-5 | DST-7 | |
| | 2 | DST-7 | DCT-5 | |
| | 3 | DCT-5 | DCT-5 | |
| Set 1 | 0 | DST-7 | DST-7 | 1, 3, 5, 7, 9, 11, 13, 23, 25, 27, 29,31,33,35,37,39,41,43,45, 55, 57, 59, 61, 63, 65 |
| | 1 | DST-1 | DST-7 | |
| | 2 | DST-7 | DST-1 | |
| | 3 | DST-1 | DST-1 | |
| Set 2 | 0 | DST-7 | DST-7 | 2, 4, 6, 8, 10, 12, 24, 26, 28, 30, 32, 34, 36, 38, 40, 42, 44, 56, 58, 60, 64, 66 |
| | 1 | DCT-8 | DST-7 | |
| | 2 | DST-7 | DCT-8 | |
| | 3 | DCT-8 | DCT-8 | |
| Set 3 | 0 | DST-7 | DST-7 | 14,15,16,17,18,19,20,21,22 (Neighboring angles to horizontal directions) |
| | 1 | DCT-5 | DST-7 | |
| | 2 | DST-7 | DCT-8 | |
| | 3 | DCT-5 | DCT-8 | |
| Set 4 | 0 | DST-7 | DST-7 | 46, 47, 48, 49, 50, 51, 52, 53, 54 (Neighboring angles to vertical directions) |
| | 1 | DCT-8 | DST-7 | |
| | 2 | DST-7 | DCT-5 | |
| | 3 | DCT-8 | DCT-5 | |

[Table 2]

| | Idx. | Hor. | Ver. |
|---|---|---|---|
| EMT_CU_Flag = 0 | N/A | DCT-2 | DCT-2 |
| EMT_CU_Flag = 1 | 0 | DCT-8 | DCT-8 |
| | 1 | DST-7 | DCT-8 |
| | 2 | DCT-8 | DST-7 |
| | 3 | DST-7 | DST-7 |

Referring to Table 1 above, in the case that an intra prediction mode is applied, a transform set may be configured according to the intra prediction mode, and each transform set may include a plurality of transform combination candidates. For example, a transform set may include five sets, Set0 to Set4, according to the intra prediction mode, and each of the transform sets Set0 to Set4 may include transform combination candidates to which index values of 0 to 3 are set. Each of the transform combination candidates may be constructed by a horizontal transform applied to a row and a vertical transform applied to a column, and types of the horizontal transform and the vertical transform may be determined based on a combination of DST7, DCT8, DST1, and DCT5.

Referring to Table 2 above, in the case that an inter prediction mode is applied, a transform combination may be configured differently according to whether the multiple transform selection is applied to a corresponding block (e.g., EMT_CU_Flag). For example, in the case that the multiple transform selection is not applied to the corresponding block (e.g., in the case that EMT_CU_Flag is 0), a transform combination set in which DCT2 is applied to the horizontal transform and the vertical transform may be used. Alternatively, in the case that the multiple transform selection is applied to the corresponding block (e.g., in the case that EMT_CU_Flag is 1), a transform combination set including four transform combination candidates may be used. In this case, the transform combination set may include transform combination candidates to which index values of 0 to 3 are set, and types of the horizontal transform and the vertical transform may be determined based on a combination of DST7 and DCT8 for each of the transform combination candidates.

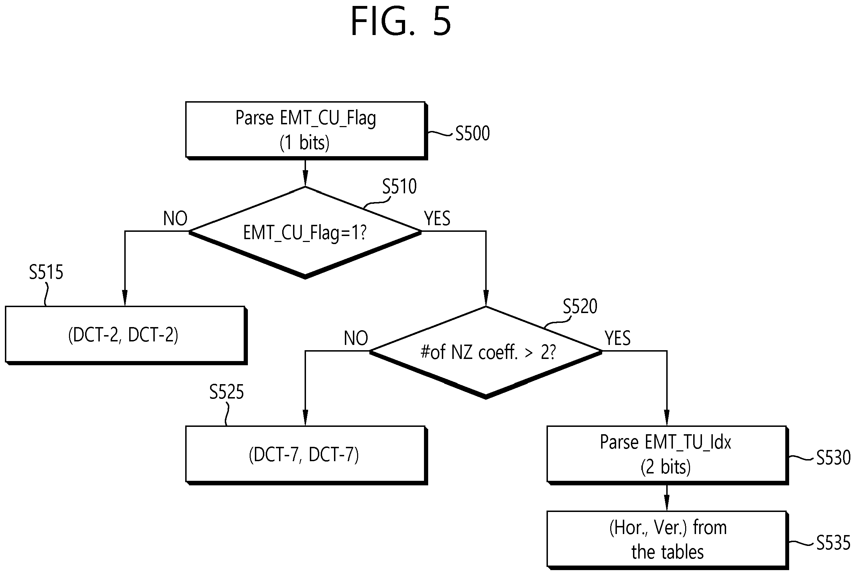

FIG. 5 is a flowchart illustrating a process of determining a transform combination according to whether the multiple transform selection (MTS or EMT) is applied according to an embodiment of the present disclosure.

According to an embodiment of the present disclosure, by using a syntax element that represents whether to apply the multiple transform selection for a current block, an application of the multiple transform selection may be determined in a block unit (e.g., a CU unit for HEVC case). In one example, the syntax element may use EMT_CU_flag.

In the intra prediction mode, in the case that EMT_CU_flag is 0, it is determined that the multiple transform selection is not applied for the current block. In this case, DCT2 or 4x4 DST7 may be applied as in the case that a single transform is used (e.g., the case of HEVC). In the intra prediction mode, in the case that EMT_CU_flag is 1, it is determined that the multiple transform selection is applied for the current block. In this case, the multiple transform combination represented in Table 1 above may be applied. A possible multiple transform combination may be changed depending on the intra prediction mode as represented in Table 1 above, and for example, in the case that the intra prediction mode is 14, 15, 16, 17, 18, 19, 20, 21, and 22 modes, DST7 and DCT5 are applied in the horizontal direction, and DST7 and DCT8 are applied in the vertical direction, and accordingly, a total of four possible combinations may be allowed. Accordingly, it is required to separately signal which combination among four combinations is applied. For this, index information of 2 bits may be used, and one of the four transform combinations may be selected and signaled through the EMT_TU_index syntax element of 2 bits, for example.

In an inter prediction mode, in the case that EMT_CU_flag is 0, DCT2 may be applied as represented in Table 2 above, and in the case that EMT_CU_flag is 1, the multiple transform combination may be applied as represented in Table 2 above. For example, as a possible multiple transform combination, a total of four possible combinations may be used by applying DST7 and DCT8 as represented in Table 2 above.

More particularly, referring to FIG. 5, the decoding apparatus may obtain and parse (entropy decoding) EMT_CU_flag syntax element (step, S500). In addition, the decoding apparatus may determine whether to apply the multiple transform selection according to the result value of the parsed EMT_CU_flag (step, S510).

In the case that EMT_CU_flag is 0, the decoding apparatus may determine not to apply the multiple transform selection and perform a transform by applying DCT2 for the current block (step, S515).

In the case that EMT_CU_flag is 1, the decoding apparatus may determine to apply the multiple transform selection and determine whether the number of non-zero transform coefficients is a specific threshold value (e.g., 2) or smaller for transform coefficients in the current block (step, S520).

In the case that the number of non-zero transform coefficients is a specific threshold value or smaller, the decoding apparatus may omit parsing EMT_TU_index and set the EMT_TU_index value to 0, and perform a transform by applying DST7 for the current block as represented in Table 1 above (step, S525).

In the case that the number of non-zero transform coefficients is not a specific threshold value or smaller, the decoding apparatus may obtain and parse the (entropy decoding) EMT_TU_index syntax element (step, S530).

The decoding apparatus may perform a transform by determining a transform combination of the horizontal direction and the vertical direction for the current block according to the parsed EMT_TU_index value (step, S535). In this case, the horizontal transform and the vertical transform corresponding to the EMT_TU_index value are selected based on the transform combinations represented in Table 1 and Table 2 above, and the multiple transform may be performed.

Meanwhile, in applying the multiple transform selection, a block size to which the multiple transform selection is applied may be restricted. For example, the block size may be restricted to 64x64 block size, and the multiple transform may not be applied in the case that the block size is greater than 64x64 size.

As described with reference to FIG. 4, in performing a transform, the primary transform may be applied, and then, the secondary transform may be additionally applied. Here, the secondary transform may use a non-separable secondary transform (NSST) or a reduced secondary transform (RST).

The NSST is applied only in the case of an intra prediction mode and has an applicable transform set for each intra prediction mode. Table 3 below represents an example in which a transform set for each intra prediction mode is allocated in the NSST.

[Table 3]

| intra mode | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
|---|---|---|---|---|---|---|---|---|---|---|---|---|---|---|---|---|---|---|---|---|---|---|---|---|---|---|---|---|---|---|---|---|---|---|
| set | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
| intra mode | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 | 65 | 66 | 67 (LM) |
| set | 34 | 33 | 32 | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | NULL |

In an embodiment, a transform set in the NSST may be configured by using the symmetry for a prediction direction. For example, since intra prediction modes 52 and 16 are symmetric with reference to intra prediction mode 34 (diagonal direction), the same transform set may be applied as represented in Table 3 above. As such, by using the symmetry of prediction direction, the intra prediction modes which are symmetric with each other may be formed as a group, and the same transform set may be allocated thereto. However, when a transform is applied to the intra prediction modes (e.g., modes 52 and 16) which are symmetric with each other with reference to a diagonal direction, the transform may be applied after an input data is transposed.

An intra prediction modes may include 2 non-directional (or non-angular) intra prediction modes and 65 directional (or angular) intra prediction modes. In some cases, number 67 intra prediction mode may be further used. The number 67 intra prediction mode may represent a linear model (LM) mode. In the case that such intra prediction modes are used, a total of 35 transform sets may be configured as represented in Table 3 above. Here, since symmetry is not present in the case of planar mode (number 0) and DC mode (number 1), which are non-directional modes, the modes have their own transform sets, and each of the transform sets may be configured with 2 transforms. For the remaining directional modes, the modes may be configured with 3 transforms for each transform set. Accordingly, the number of total available transforms may be 103 (= 2x2+33x3).

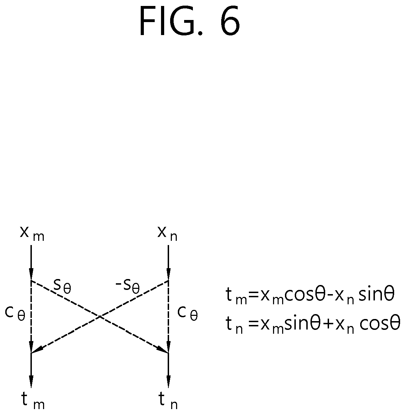

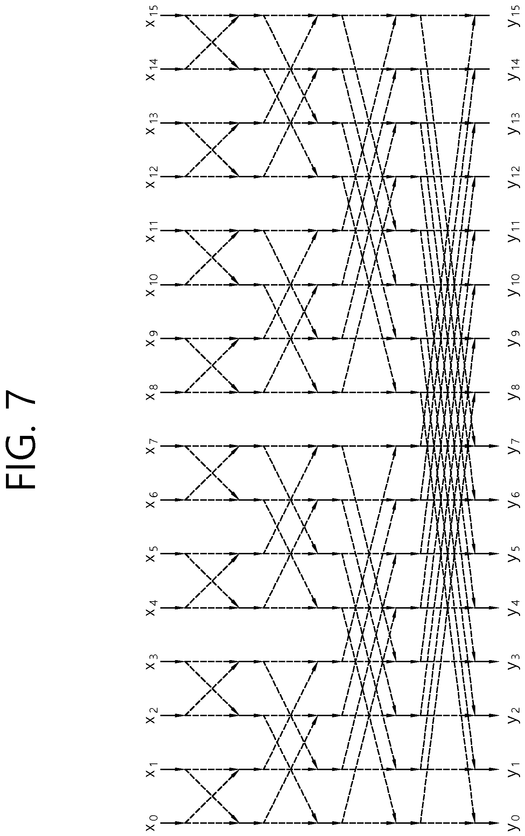

FIGS. 6 and 7 are diagrams for describing the non-separable secondary transform (NSST) according to an embodiment of the present disclosure.

The NSST may not be applied to the entire block to which the primary transform is applied (e.g., TU for HEVC case), but applied only to top-left 8x8 area of the block. Of course, the NSST may be applied to the entire area for the block of 8x8 size or smaller.

That is, the 8x8 NSST is applied to the case that a block size is 8x8 or greater, and the 4x4 NSST is applied to the case that a block size is less than 8x8, and in this case, the block is divided into 4x4 blocks and the 4x4 NSST may be applied thereto. Both of the 8x8 NSST and the 4x4 NSST may follow the transform set configuration represented in Table 3 described above. Since the 8x8 NSST is a non-separable transform, the 8x8 NSST receives 64 data sets as an input and outputs 64 data sets, and the 4x4 NSST has 16 inputs and 16 outputs.

Both of the 8x8 NSST and the 4x4 NSST may be configured as a hierarchical combination of Givens rotations. A matrix corresponding to one Givens rotation may be as represented by Equation 1.

[Equation 1]

$$R_\theta = \begin{bmatrix} \cos\theta & -\sin\theta \\ \sin\theta & \cos\theta \end{bmatrix}$$

The calculation for the Givens rotation based on Equation 1 above can be depicted as shown in FIG. 6. FIG. 6 shows the matrix multiplication of Equation 1 as a diagram. As shown in FIG. 6, since a single Givens rotation rotates two data sets, a total of 32 or 8 Givens rotations are required to process 64 (for the 8x8 NSST) or 16 (for the 4x4 NSST) data sets. Accordingly, a bundle of 32 or 8 data sets forms a Givens rotation layer.

FIG. 7 illustrates a process in which four Givens rotation layers are sequentially processed for the 4x4 NSST case. As shown in FIG. 7, an output data for a Givens rotation layer is transferred to an input data for the next Givens rotation layer after going through a predetermined permutation (shuffling). As shown in FIG. 7, a permutation pattern is regularly predetermined, and for the 4x4 NSST case, establishes a single round by adding four Givens rotation layers and the corresponding permutations. For the 8x8 NSST case, six Givens rotation layers and the corresponding permutations establish a single round. Two rounds are required for the 4x4 NSST, and four rounds are required for the 8x8 NSST. The same permutation pattern is used between different rounds, but the applied Givens rotation angles are different for each case. Therefore, angle data for all Gives rotations constructing each transform needs to be stored.

As the last step, a permutation is further performed finally for the output data going through Givens rotation layers, and the corresponding permutation information is separately stored for each transform. In the Forward NSST, the corresponding permutation is performed in the last step, and in the Inverse NSST, inverse of the corresponding permutation is applied in the first step, on the contrary. For the Inverse NSST, the Givens rotation layers and the permutations applied in the Forward NSST are performed in an inverse order, and the angle of each Givens rotation is rotated by taking minus value thereto.

As described above, in performing the secondary transform, the NSST or a reduced secondary transform (RST) to be described below may be used.

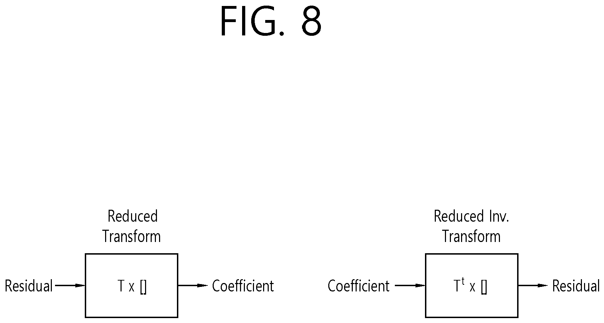

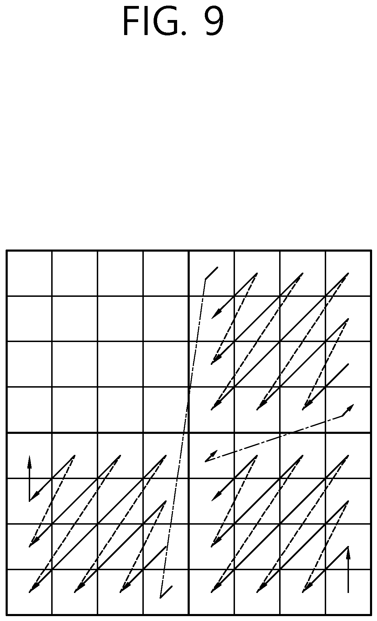

FIGS. 8 and 9 are diagrams for describing the RST according to an embodiment of the present disclosure.

When an orthogonal matrix that represents a single transform has an NxN form, for a Reduced Transform (RT), R vectors remain among N transform basis vectors (here, R < N). A matrix for a forward RT that generates a transform coefficient is given by Equation 2.

[Equation 2]

$$T_{RxN} = \begin{bmatrix} t_{11} & t_{12} & t_{13} & \cdots & t_{1N} \\ t_{21} & t_{22} & t_{23} & & t_{2N} \\ & \vdots & & \ddots & \vdots \\ t_{R1} & t_{R2} & t_{R3} & \cdots & t_{RN} \end{bmatrix}$$

Since a matrix for the inverse RT becomes a transpose matrix of a forward RT matrix, the application of the forward RT and the inverse RT are schematized as shown in FIG. 8.

In an embodiment, an RT may be applied to a top-left 8x8 block of a block (hereinafter, transform coefficient block) including transform coefficients going through a primary transform. In this case, the RT may be referred to as the 8x8 RST. When the R value is taken as 16 in Equation 2 above, the 8x8 RST has a 16x64 matrix form for the forward 8x8 RST case and a 64x16 matrix form for the inverse 8x8 RST case. In addition, even for the 8x8 RST, the transform set configuration as the same as Table 3 above may be applied. That is, the 8x8 RST may be applied according to the transform set represented in Table 3 above. Since a single transform set includes 2 or 3 transforms depending on an intra prediction mode, one of a maximum of 4 transforms including the case to which the secondary transform is not applied may be selected (a single transform may be regarded as an identity matrix). When indices of 0, 1, 2, and 3 are provided for 4 transforms, respectively (e.g., number 0 index may be allocated to an identity matrix, that is, the case that the secondary transform is not applied), a syntax element and an NSST index may be signaled for each transform coefficient block and the applied transform may be designated. That is, through the NSST index, for an 8x8 top-left block, the case of NSST may designate the 8x8 NSST, and the RST configuration may designate the 8x8 RST.

When the forward 8x8 RST is applied as represented in Equation 2 above, 16 valid transform coefficients are generated, and it can be seen that 64 input data configuring an 8x8 area are reduced to 16 output data. In the aspect of 2-dimensional area, valid transform coefficients are filled only in 1/4 of the area. Therefore, 16 output data obtained by applying the forward 8x8 RST may be filled in the top-left area of a transform coefficient block.

FIG. 9 is a diagram illustrating a transform coefficient scanning order and shows scanning from the 17th coefficient to the 64th coefficient when a forward scanning order is given from the first (on the forward scanning order). Since FIG. 9 shows an inverse scan, it can be seen that the inverse scanning is performed from the 64th coefficient to the 17th coefficient (referring to the arrow direction).

Referring to FIG. 9, a top-left 4x4 area of a transform coefficient block is a Region of Interest (ROI) area in which valid transform coefficients are filled, and the remaining areas are emptied. In the emptied area, 0 value may be filled as a default. In the case that a non-zero valid transform coefficient is found outside of the ROI area, it is certain that the 8x8 RST is not applied, and the corresponding NSST index coding may be omitted. On the other hand, in the case that a non-zero valid transform coefficient is not found outside of the ROI area shown in FIG. 9 (the case that the 8x8 RST is applied, when zero is filled outside of the ROI area), there is a possibility that the 8x8 RST is applied, and an NSST index may be coded. In such a conditional NSST index coding, whether a non-zero transform coefficient is present needs to be checked, and accordingly, the conditional NSST index coding may be performed after a residual coding process.

Hereinafter, the design and associated optimization methods of RST which is applicable to a 4x4 block from the RST structure are described. It is apparent that some concepts may also be applied to the 8x8 RST or transform of the other format as well as the 4x4 RST.

In applying the RST, the present disclosure proposes an RST which is applicable to a 4x4 block.

According to an example of the present disclosure, a non-separable transform or RST that can be applied to one 4x4 transform block, that is, a 4x4 target block to be transformed is a 16x16 transform. That is, if the data elements constituting the 4x4 target block are arranged in row-first or column-first order, they become a 16x1 vector, and non-separable transform or RST can be applied to the target block. Forward, that is, the forward 16x16 transform that can be performed in the encoding apparatus is constituted with sixteen row direction transform basis vectors, and when an inner product is taken of the 16x1 vector and each transform basis vector, the transform coefficient for the corresponding transform basis vector is obtained. The process of obtaining the corresponding transform coefficients for the sixteen transform basis vectors is the same as multiplying the 16x16 non-separable transform or the RST matrix and the input 16x1 vector. The transform coefficients obtained by matrix multiplication have a 16x1 vector form, and statistical characteristics may be different for each transform coefficient. For example, if the 16x1 transform coefficient vector is constructed with the 0th element to the 15th element, the variance of the 0th element may be greater than the variance of the 15th element. That is, one element located in front of another element may have a greater energy value due to a greater variance value.

Meanwhile, if the inverse 16x16 non-separable transform or inverse RST is applied (when effects of quantization or integerisation calculations are ignored), the original 4x4 target block signal before the transform can be reconstructed from the 16x1 transform coefficient. If the forward 16x16 non-separable transform is an orthonormal transform, the inverse 16x16 transform can be obtained by taking a transpose of the matrix for the forward 16x16 transform. Simply multiplying the inverse 16x16 non-separable transform matrix and the 16x1 transform coefficient vector yields data in the form of a 16x1 vector, and the 4x4 block signal may be reconstructed by arranging it in the row-first or column-first order that was first applied.

Meanwhile, as described above, the elements constituting the 16x1 transform coefficient vector may have different statistical characteristics. As in the previous example, if the transform coefficient located more near the front side (closer to the 0th element) has greater energy, a signal that is very close to the original signal can be reconstructed even though the inverse transform is applied to some of the transform coefficients that appear first without using all the transform coefficients. For example, if the inverse 16x16 non-separable transform is constituted with sixteen column basis vectors, it is possible to reconstruct a 16x1 vector having little error from the original input 16x1 vector data by multiplying a 16xL matrix and a Lx1 vector after constructing the 16xL matrix by leaving only L column basis vectors, and leaving only L transform coefficients that are more important among the transform coefficients (Lx1 vector, may appear first as in the previous example). As a result, since only L coefficients are involved in the data restoration, obtaining the Lx1 transform coefficient vector instead of a 16x1 transform coefficient vector is sufficient even when obtaining a transform coefficient. That is, by selecting L corresponding row direction transform vectors from the forward 16x16 non-separable transform matrix, the Lx16 transform matrix is constructed, and then it is multiplied to the 16x1 input vector, so that L significant transform coefficients can be obtained.

At this time, although the L value has a range of $1 \leq L < 16$, and in general, L transform basis vectors may be selected by any method from the sixteen transform basis vectors, it may be advantageous in terms of encoding efficiency to select the transform basis vectors having a high importance in terms of signal energy, as in the example presented above from the perspective of encoding and decoding.

In addition, in applying RST, the present disclosure proposes a method of setting an application area of 4x4 RST and arranging transform coefficients.

In an embodiment of the present disclosure, the 4x4 RST may be applied as the secondary transform, and in this case, it may be applied secondarily to a block to which a primary transform such as DCT-type 2 has been applied. When the size of the block to which the primary transform is applied is assumed to be N x N, in general, the 4x4 RST can be applied when N x N is greater than or equal to 4x4. An example of applying the 4x4 RST to an N x N block is as follows.

1) The 4x4 RST can be applied only to some regions, not all regions of N x N. For example, it can be applied only to the top-left M x M region (M ≤ N).
2) After dividing a region to which the secondary transform is applied into 4x4 blocks, the 4x4 RST may be applied to each divided block.
3) The above 1) and 2) may be mixed and applied. For example, after dividing the top-left M x M region into 4x4 blocks, the 4x4 RST may be applied to the divided region.

As a specific example, the secondary transform may be applied only to the top-left 8x8 region, and when the N x N block is greater than or equal to 8x8, 8x8 RST may be applied, while, when the N x N block is less than 8x8 (4x4, 8x4, 4x8), it may be divided into 4x4 blocks as in the above 2) and then the 4x4 RST may be applied.

Assuming that L transform coefficients (1≤L<16) are generated after applying the 4x4 RST, there is a degree of freedom for how to arrange the L transform coefficients (that is, how to map the transform coefficients into the target block). However, since a predetermined order exist when the transform coefficients are read and processed in the residual coding part, coding performance may vary depending on how the L transform coefficients are arranged in a 2-dimensional block. Residual coding in HEVC starts from the position farthest from the DC position. This is to improve coding performance by using the fact that the quantized coefficient value is 0 or closer to 0 as the distance from the DC position increases. Therefore, for the L transform coefficients, it may be advantageous in terms of coding performance to arrange more important coefficients having high energy to be coded later in the order of residual coding.

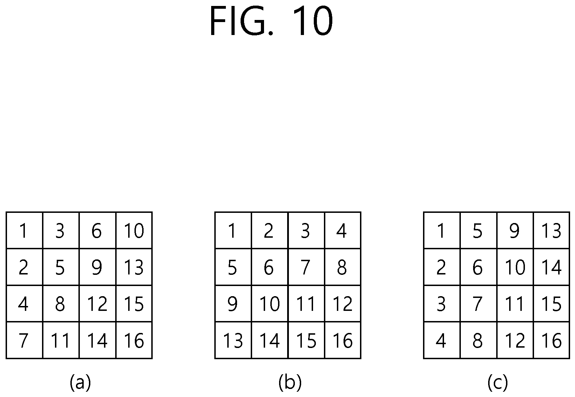

FIG. 10 represents three forward scan orders that can be applied to a 4x4 transform coefficient or a transform coefficient block (4x4 block, Coefficient Group (CG)) applied in the HEVC standard. FIG. 10(a) represents a diagonal scan; FIG. 10(b) represents a horizontal scan; and FIG. 10(c) represents a vertical scan.

The residual coding follows the inverse order of the scan order of FIG. 10, that is, the coding is performed in the order of 16 to 1. Since the three scan orders shown in FIG. 10 are selected according to the intra prediction mode, it may be configured such that the scan order for the L transform coefficients is identically determined according to the intra prediction mode.

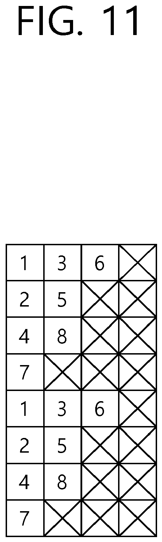

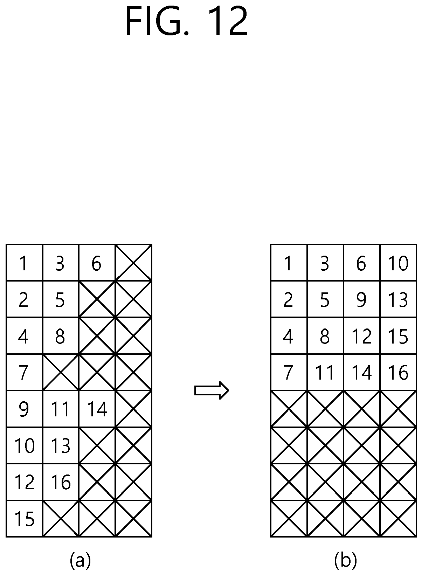

FIGS. 11 and 12 are diagrams illustrating a mapping of transform coefficients according to a diagonal scanning order according to an embodiment of the present disclosure. The embodiments of FIG. 11 and FIG. 12 show examples of locating valid transform coefficients according to the diagonal scanning order when the 4x4 RST is applied for a 4x8 block.

In an embodiment, when a top-left 4x8 block is partitioned into 4x4 blocks and the 4x4 RST is applied, respectively, according to the diagonal scanning order, when the L value is 8 (i.e., on 8 transform coefficients remains among 16 transform coefficients), the transform coefficients may be located as shown in FIG. 11. For example, as shown in FIG. 11, transform coefficients may be mapped to a half area of each 4x4 block, and 0 value may be filled in the positions marked by X as a default.

Accordingly, by assuming that L transform coefficients are disposed for each 4x4 block according to the scanning order presented in FIG. 10, and 0 is filled in the remaining (16 - L) positions of each 4x4 block, the corresponding residual coding (e.g., residual coding in the conventional HEVC) may be applied.

In another embodiment, as shown in FIG. 12(a), the L transform coefficients disposed in each of two 4x4 blocks may be merged into a single 4x4 block and disposed as shown in FIG. 12(b). Particularly, when the L value is 8, transform coefficients of two 4x4 blocks are disposed in a single 4x4 block and completely filled in a single 4x4 block, and any other transform coefficients do not remain in another 4x4 bock. Therefore, since most of residual coding becomes unnecessary for the emptied 4x4 block, the coded_sub_block_flag may be coded as 0 for HEVC case. Here, the coded_sub_block_flag applied in HEVC (or VVC) is flag information for specifying a position of a subblock, which is a 4x4 array for 16 transform coefficient levels in a current transform block, and may be signaled as "0" for the 4x4 block in which residual does not remain.

In addition, various methods are possible for mixing the transform coefficients of two 4x4 blocks. In general, they may be combined in any order, but practical examples may include the following methods.

(1) The transform coefficients of the two 4x4 blocks are mixed alternately in the scan order. That is, when the transform coefficients for the upper block in FIG. 12 are $c_0^u$, $c_1^u$, $c_2^u$, $c_3^u$, $c_4^u$, $c_5^u$, $c_6^u$, $c_7^u$, and the transform coefficients of the lower block are $c_0^l$, $c_1^l$, $c_2^l$, $c_3^l$, $c_4^l$, $c_5^l$, $c_6^l$, $c_7^l$, the coefficients may be mixed alternately as follows: $c_0^u$, $c_0^l$, $c_1^u$, $c_1^l$, $c_2^u$, $c_2^l$, ... , $c_7^u$, $c_7^l$. Of course, Of course, the order of $c_\#^u$ and $c_\#^l$ may be changed so that $c_\#^l$ is mapped first.

(2) The transform coefficients for the first 4x4 block may be placed first and then the transform coefficients for the second 4x4 block may be placed. In other words, they may be continuously arranged as follows: $c_0^u$, $c_1^u$, ... , $c_7^u$, $c_0^l$, $c_1^l$, ... , $c_7^l$. Of course, the order may be changed as follows: $c_0^l$, $c_1^l$, ... , $c_7^l$, $c_0^u$, $c_1^u$, ... , $c_7^u$.

Hereinafter, a method of coding an NSST index for a 4x4 RST will be described. The first method is a case where the NSST index is coded after the residual coding, and the second method is a case where the NSST index is coded before the residual coding.

In coding the NSST index, in the present disclosure, the NSST index may be coded after residual coding.

As shown in FIG. 11, when the 4x4 RST is applied, 0 values may be filled from L+1th to 16th according to the transform coefficient scan order for each 4x4 block. Therefore, if a non-zero value occurs among the L+1th to 16th positions in even one of the two 4x4 blocks, it corresponds to the case where the 4x4 RST is not applied.

If the 4x4 RST has a structure that selects and applies one of the prepared transform set such as NSST, it is possible to signal an index (which may be referred to as a transform index, a RST index, or an NSST index) on which transform is to be applied.

Let us assume that if the NSST index is known through the bitstream parsing in the decoding apparatus, this parsing process is performed after the residual coding. If residual coding is performed and it is found that at least one non-zero transform coefficient exists between the L+1th to the 16th, then it is certain that the 4x4 RST is not applied as described above, so it may be set not to parse the NSST index. Therefore, in this case, the NSST index is selectively parsed only when necessary, thus increasing the signaling efficiency.

For example, as in FIG. 11, if the 4x4 RST is applied to several 4x4 blocks within a specific region (all the same 4x4 RSTs may be applied to all or different 4x4 RSTs may be applied), the (same or different) 4x4 RSTs applied to all the 4x4 blocks may be designated through one NSST index. Since the 4x4 RSTs for all the 4x4 blocks and whether to apply or not are determined by one NSST index, it may be configured that the NSST index is not coded when a non-zero transform coefficient exists in an unallowed position (from L+1th to 16th position) even in one 4x4 block by checking during the residual coding process whether there is a non-zero transform coefficient at positions from L+1th to 16th for all the 4x4 blocks.

These NSST indexes may be signaled separately for a luma (Luminance) block and a chroma (Chrominance) block, or in the case of the chroma block, separate NSST indexes may be signaled for Cb and Cr, or one NSST index may be shared by signaling the NSST index only once.

If one NSST index is shared for Cb and Cr, the 4x4 RST indicated by the same NSST index may be applied (the 4x4 RSTs for Cb and Cr may be the same, or separate 4x4 RSTs may be applied even though the NSST index is the same). To apply the above-described conditional signaling for the shared NSST index, it is checked whether there are non-zero transform coefficients from L+1th to 16th for all 4x4 blocks for Cb and Cr, and if any non-zero transform coefficient is found, it may be configured that signaling for the NSST index is omitted.

As another example, also in the case of combining the transform coefficients for two 4x4 blocks as in FIG. 12, after checking whether a non-zero transform coefficient appears at a position where no effective transform coefficient exists when the 4x4 RST is applied, it is possible to determine whether to signal the NSST index. In particular, in a case where the L value is 8 as in FIG. 12 and there are no effective transform coefficients for one 4x4 block when 4x4 RST is applied (the block indicated by Xs in (b) of FIG. 12), it may be set that the NSST index is not signaled if the value is 1 after checking the coded_sub_block_flag of the block without valid transform coefficients.

In addition, in coding the NSST index, in the present disclosure, the NSST index may be coded before residual coding.

According to an embodiment of the present disclosure, if the coding for the NSST index is performed before residual coding, whether or not to apply the 4x4 RST is determined in advance, so residual coding may be omitted for locations where the transform coefficient is sure to be filled with zero.

In this regard, the NSST index value may be signaled so as to make it known whether to apply the 4x4 RST (e.g., if the NSST index is 0, the 4x4 RST is not applied), or it may be signaled through a separate syntax element. For example, if the separate syntax element is the NSST flag, the NSST flag is first parsed to determine whether the 4x4 RST is applied. Then, if the NSST flag value is 1, residual coding may be omitted for positions in which a valid transform coefficient cannot exist.

In the case of HEVC, when performing the residual coding, the last non-zero coefficient position on the TU is first of all coded. If the coding for the NSST index is performed after the last non-zero coefficient position coding, and the location of the last non-zero coefficient is identified as a location where a non-zero coefficient cannot occur assuming the application of 4x4 RST, then the NSST index may not be coded and the 4x4 RST may not be applied. For example, in the case of positions indicated by Xs in FIG. 12, since valid transform coefficients are not located when the 4x4 RST is applied (e.g., a value of 0 may be filled), the coding for the NSST index may be omitted if the last non-zero coefficient is located in the region indicated by X. If the last non-zero coefficient is not located in the region indicated by X, the coding for the NSST index may be performed.

If it is known whether to apply the 4x4 RST by conditionally coding the NSST index after coding for the last non-zero coefficient position (as described above, if the location of the last non-zero coefficient is not allowed when assuming the application of the 4x4 RST, then the coding for the NSST index may be omitted), the remaining residual coding portion after this may be processed in the following two ways.

(1) In the case where the 4x4 RST is not applied, general residual coding may be maintained as it is. That is, the coding is performed under the assumption that the non-zero transform coefficient may exist at any position from the last non-zero coefficient position to the DC position.

(2) In the case of applying the 4x4 RST, for a specific position or a specific 4x4 block (for example, the X position in FIG. 11), the corresponding transform coefficient should not exist (it may be filled with zero by default), so that the residual coding for the corresponding position or block may be omitted. For example, when reaching a position indicated by X in FIG. 11, the coding for sig_coeff_flag (a flag for whether a non-zero coefficient exists at a corresponding position applied to HEVC and VVC) may be omitted, and when the transform coefficients of the two blocks are combined as shown in FIG. 12, the coding for coded_sub_block flag (exists in HEVC) for the 4x4 block emptied to 0 may be omitted and the corresponding value may be derived as 0, and the 4x4 block may be filled with zero values without separate coding.

On the other hand, in the case of coding the NSST index after the coding for the last non-zero coefficient position, if the x-position (Px) and y-position (Py) of the last non-zero coefficient are less than Tx and Ty (specific threshold), respectively, it may be configured that the NSST index coding is omitted and the 4x4 RST is not applied. For example, when Tx = 1 and Ty = 1, it means that the NSST index coding is omitted when the last non-zero coefficient exists in the DC position. The method of determining whether to code the NSST index through comparison with the threshold value may be applied differently to luma and chroma. For example, different Tx and Ty may be applied to luma and chroma, or a threshold value may be applied to luma (or chroma) and may not applied to chroma (or luma).

Of course, both methods of omitting the NSST index coding (a method of omitting the NSST index coding when the last non-zero coefficient is located in a region where no valid transform coefficient exists, and a method of omitting the NSST index coding when the X and Y coordinates of the last non-zero coefficient are each smaller than a certain threshold) may be applied. For example, after first performing a threshold check for the last non-zero coefficient position coordinates, it may be checked whether the last non-zero coefficient is located in the region where a valid transform coefficient does not exist, and the inverse order is also possible.

The method of coding the NSST index before the residual coding may be applied to the 8x8 RST. That is, if the last non-zero coefficient is located in a top-left 8x8 region other than the top-left 4x4 region, the coding for the NSST index may be omitted, or otherwise, the coding for the NSST index may be performed. In addition, if the X and Y coordinate values for the last non-zero coefficient position are all less than a certain threshold, the coding for the NSST index may be omitted. Of course, both methods may be applied together.

In addition, in coding the NSST index, according to the present disclosure, different NSST index coding and residual coding schemes may be applied to luma and chroma, respectively, when the RST is applied.

The first method (method 1) in which the NSST index coding is performed after a residual coding and the second method (method 2) in which the NSST index coding is performed before a residual coding may be differently applied to luma and chroma, respectively.

For example, luma may follow the scheme described in method 2, and method 1 may be applied to chroma. Alternatively, the NSST index coding is conditionally applied to luma according to method 1 or method 2, and the conditional NSST index coding is not applied to chroma, and the opposite case is also available. That is, the NSST index coding is conditionally applied to chroma according to method 1 or method 2, and the conditional NSST index coding is not applied to luma.

Hereinafter, an optimization method for the case that the multiple transform is applied as the primary transform is described.

In applying the multiple transform, in the present disclosure, the multiple transform may be applied based on the Reduced transform (RT) method. This may also be referred to as the term such as a Reduced Explicit Multiple Transform (REMT) or a Reduced Adaptive Multiple Transform (RAMT).

As described above, like in the multiple transform selection (or Explicit Multiple Transform; Adaptive Multiple Transform), in the case that combinations of several transforms (DCT2, DST7, DCT8, DST1, DCT5, etc.) are selectively used for the primary transform, transform is not performed for all cases but applied for a predefined area for reducing complexity, and the worst case complexity may be significantly reduced.

For example, in the case that the primary transform is applied for the pixel block having a size of MxM based on the Reduced transform (RT) method described above, instead of obtaining a transform block having a size of MxM, a calculation only for the transform block of RxR (M>=R) may be performed. Consequently, valid non-zero coefficients are present only for an RxR area, and the transform coefficients present in the other areas may be regarded as zero without performing the calculation. Table 4 below represent three examples of the Reduced Adaptive Multiple Transform (RAMT) that uses a predefined R value for each primary transform size.

[Table 4]

| Transform size | Reduced transform 1 | Reduced transform 2 | Reduced transform 3 |
|---|---|---|---|
| 8x8 | 4x4 | 6x6 | 6x6 |
| 16x16 | 8x8 | 12x12 | 8x8 |
| 32x32 | 16x16 | 16x16 | 16x16 |
| 64x64 | 32x32 | 16x16 | 16x16 |
| 128x128 | 32x32 | 16x16 | 16x16 |

In applying the RAMT (or REMT) described above, according to the present disclosure, a reduced transform factor (RT factor) (R) may be dependently determined depending on the corresponding primary transform.

For example, in the case that the primary transform is DCT2, since an amount of calculation is relatively small in comparison with the other primary transforms, an RT may not be used for a small block, or a relatively greater R value is use, and accordingly, a reduction in coding performance may be minimized. For example, in the case of the case of DCT2 or other transforms, different RT factors may be used as represented in Table 5 below. Table 5 represents an example of the RAMT in which different RT factors are used for each transform size.

[Table 5]

| Transform size | Reduced transform for DCT2 | Reduced transform except DCT2 |
|---|---|---|
| 8x8 | 8x8 | 4x4 |
| 16x16 | 16x16 | 8x8 |
| 32x32 | 32x32 | 16x16 |
| 64x64 | 32x32 | 32x32 |
| 128x128 | 32x32 | 32x32 |

In addition, in applying the multiple transform, according to the present disclosure, the EMT (or AMT) core transform may be selected depending on an intra prediction mode. As represented in Table 1 and Table 2 above, in the case that EMT_CU_Flag = 1 (or AMT_CU_Flag=1), one of four combinations of EMT indices (0, 1, 2, and 3) may be selected through EMT_TU_index of 2 bits, and based on the given EMT index, a transform type to be applied to the corresponding primary transform may be selected. Table 6 below represents an example of a mapping table for selecting a transform type applied to the primary transform for horizontal and vertical directions based on the EMT index value.

[Table 6]

| EMT_TU_index | Transform for vertical direction | Transform for horizontal direction |
|---|---|---|
| 0 | 0 (DCT-8) | 0 (DCT-8) |
| 1 | 0 (DCT-8) | 1 (DST-7) |

(continued)

| EMT_TU_index | Transform for vertical direction | Transform for horizontal direction |
|---|---|---|
| 2 | 1 (DST-7) | 0 (DCT-8) |
| 3 | 1 (DST-7) | 1 (DST-7) |

In the present disclosure, the statistics of primary transforms occurring according to an intra prediction mode are analyzed, and based on the statistics, a more efficient EMT core transform mapping is proposed. First, Table 7 below represents a distribution of EMT_TU_index for each intra prediction mode in percentage (%).

[Table 7]

| EMT_TU_index | 0 (planar mode) | 1 (DC mode) | Hor mode | Ver mode |
|---|---|---|---|---|
| 0 | 53.51 | 35.86 | 53.33 | 55.32 |
| 1 | 17.34 | 23.05 | 7.59 | 31.55 |
| 2 | 19.82 | 23.80 | 33.36 | 7.73 |
| 3 | 9.26 | 17.20 | 5.73 | 5.39 |

Based on the intra prediction mode using 67 modes, in Table 7 above, the horizontal direction (Hor) mode represents modes from number 2 to number 33 , and the vertical directional (Ver) mode represents directional modes from number 34 to number 66.

As it is known from Table 7 above, for the horizontal direction (Hor) mode (2 <= mode <= 33), the case of EMT_TU_index = 2 shows significantly greater probability than the case of EMT_TU_index = 1. Therefore, in the present disclosure, a mapping table is proposed as represented in Table 8 below.

[Table 8]

| EMT_TU_index | Hor mode | | Other mode (Ver mode, planar, DC) | |
|---|---|---|---|---|
| | Vertical T | Horizontal T | Vertical T | Horizontal T |
| 0 | DCT-8 | DCT-8 | DCT-8 | DCT-8 |
| 1 | DST-7 | DCT-8 | DCT-8 | DST-7 |
| 2 | DCT-8 | DST-7 | DST-7 | DCT-8 |
| 3 | DST-7 | DST-7 | DST-7 | DST-7 |

Table 8 above represents an example in which different mapping is used for the horizontal direction (Hor) mode groups. In the method of deriving the primary transform based on EMT_TU_index, different mapping table may be used based on an intra prediction direction.

Furthermore, in the present disclosure, an available EMT_TU_index is not the same for each intra prediction mode but may be differently defined. For example, as represented in Table 7 above, for the planar mode, since a generation probability of the case of EMT_TU_index = 3 (the case of EMT_TU_index >1 for the angular mode) is relatively row, and by excluding the index part of which generation probability is row, a more efficient coding is possible. Table 9 represents the case that an available EMT_TU_index value is dependent on each intra prediction mode as an example.

[Table 9]

| | 0 (planar mode) | 1 (DC mode) | Hor mode | Ver mode |
|---|---|---|---|---|
| EMT_TU_index available | 0,1,2 | 0,1,2,3 | 0,1 | 0,1 |

In the present disclosure, the following two coding methods are proposed to efficiently code values of EMT_TU_index which are distributed differently for each intra prediction mode described above.
1) When EMT (AMT) TU index is binarized, instead of the fixed length binarization method, the EMT (AMT) TU index may be coded by using the Truncated method. Table 10 below represents an example of a fixed length and the truncated unary binarization method.

[Table 10]

| EMT_TU_ index | Fixed Length Coding | Truncated unary (maximum value is 3) | Truncated unary (maximum value is 2) |
|---|---|---|---|
| 0 | 00 | 0 | 0 |
| 1 | 01 | 10 | 10 |
| 2 | 10 | 110 | 11 |
| 3 | 11 | 111 | NA |

2) When an EMT TU index value is coded through a context modeling, a context model may be determined by using information of an intra prediction mode. Table 11 below represents three embodiments (method 1, method 2, and method 3) in which an intra prediction mode is mapped according to a context. Particularly, the context modeling method for each intra prediction mode specified in the present disclosure may be considered together with other factors such as a block size.

[Table 11]

| Context | Method 1 | Method 2 | Method 3 |
|---|---|---|---|
| 0 | DC, Planar | DC | Planar |
| 1 | Hor mode | Planar | Hor mode, Ver mode, DC |
| 2 | Ver mode | Hor mode, Ver mode | |

Hereinafter, according to the present disclosure, a process of performing a transform by applying the multiple transform selection (MTS) is proposed in the AMT (or EMT) scheme, and a syntax element for applying the multiple transform selection is proposed, and then, a method for determining a kernel type (transform type) used for the multiple transform is proposed.

In an embodiment of the present disclosure, in performing a transform, a syntax element that represents whether the multiple transform selection is available for performing a transform may be used. By using the syntax element, whether a transform may be performed by using the multiple transform selection for a current coding target block from the encoding apparatus to the decoding apparatus may be explicitly signaled. Table 12 below represents an example of a syntax table for signaling information representing whether the multiple transform selection is available in a sequence parameter set. Table 13 below represents an example of a Semantics table that defines information represented by the syntax elements of Table 12.

[Table 12]

| seq_parameter_set_rbsp() { | Descriptor |
|---|---|
| **sps_seq_parameter_set_id** | ue(v) |
| **chroma format idc** | ue(v) |
| if( chroma_format_idc = = 3 ) | |
| **separate_colour_plane_flag** | u(l) |
| **pic_width_in_luma_samples** | ue(v) |
| **pic_height_in_luma_samples** | ue(v) |
| **bit_depth_luma_minus8** | ue(v) |
| **bit_depth_chroma_minus8** | ue(v) |
| **qtbtt_dual_tree_intra_flag** | ue(v) |
| **log2_ctu_size_minus2** | ue(v) |

(continued)

| seq_parameter_set_rbsp() { | Descriptor |
|---|---|
| log2_min_qt_size_intra_slices_minus2 | ue(v) |
| log2_min_qt_size_inter_slices_minus2 | ue(v) |
| max_mtt_hierarchy_depth_inter_slices | ue(v) |
| max_mtt_hierarchy_depth_intra slices | ue(v) |
| sps_cclm_enabled_flag | ue(1) |
| sps_mts_intra_enabled_flag | ue(1) |
| sps_mts_inter_enabled_flag | ue(1) |
| rbsp_trailing_bits( ) | |
| } | |

[Table 13]

> **sps_mts_intra_enabled_flag** equal to 1 specifies that cu_mts_flag may be present in the residual coding syntax for intra coding units. sps_mts_intra_enabled_flag equal to 0 specifies that cu_mts_flag is not present in the residual coding syntax for intra coding units.
>
> **sps_mts_inter_enabled_flag** specifies that cu_mts_flag may be present in the residual coding syntax for inter coding units. sps_mts_inter_enabled_flag equal to 0 specifies that cu_mts_flag is not present in the residual coding syntax for inter coding units.

Referring to Table 12 and Table 13, in performing a transform, as information representing whether the multiple transform selection is available, sps_mts_intra_enabled_flag or sps_mts_inter_enabled_flag syntax element may be used. For example, the sps_mts_intra_enabled flag may be information that represents whether the multiple transform selection is available for an intra coding block, and the sps_mts_inter_enabled_flag may be information that represents whether the multiple transform selection is available for an inter coding block. Here, the intra coding block is referred to as a block coded with an intra prediction mode, and the inter coding block is referred to as a block coded with an inter prediction mode.

In an embodiment, the encoding apparatus may signal by configuring whether a transform based on the multiple transform selection is available for the intra coding block through the sps_mts_intra_enabled_flag, and the decoding apparatus may decode the sps_mts_intra_enabled_flag and determine whether the multiple transform selection is available for the intra coding block. Alternatively, the encoding apparatus may signal by configuring whether a transform based on the multiple transform selection is available for the inter coding block through the sps_mts_inter_enabled_flag, and the decoding apparatus may decode the sps_mts_inter_enabled_flag and determine whether the multiple transform selection is available for the inter coding block. As such, in the case that the corresponding intra coding block or the corresponding inter coding block is determined to be available for the multiple transform selection based on the sps_mts_intra_enabled_flag or the sps_mts_inter_enabled_flag, information (e.g., cu_mts_flag) to be described below that represents whether the multiple transform selection is applied or information (e.g., mts_idx) that represents a transform kernel used in the multiple transform selection may be additionally signaled.

Here, Table 12 represents that the sps_mts_intra_enabled_flag or sps_mtsinter_enabled_flag syntax element is signaled in a sequence level (i.e., sequence parameter set), but also signaled through a slice level (i.e., slice header) or a picture level (i.e., picture parameter set).

In addition, in an embodiment of the present disclosure, in the case that the sps_mts_intra_enabled_flag or the sps_mts_inter_enabled_flag signaled through a higher level (e.g., sequence parameter set, etc.) represents that a transform based on the multiple transform selection is available as represented in Table 12 above, information representing whether the multiple transform selection is applied in the corresponding block may be additionally signaled in a lower level (e.g., residual coding syntax, transform unit syntax, etc.). Table 14 below represents an example of a syntax table for signaling information (e.g., cu_mts_flag) representing whether multiple transform selection is applied additionally in a lower level (e.g., transform unit syntax) based on the syntax element (e.g., sps_mts_intra_enabled_flag or sps_mts_inter_enabled_flag) which is explicitly signaled in a higher level. Table 15 represents an example of a Semantics table that defines information represented by the syntax elements of Table 14.

[Table 14]

| transform_unit(x0, y0, tbWidth, tbHeight, treeType) { | Descriptor |
|---|---|
| if(treeType = = SINGLE_TREE \|\| treeType = = DUAL_TREE_LUMA) | |
| **tu_cbf_luma**[x0 ][ y0 ] | ae(v) |
| if(treeType = = SINGLE_TREE \|\| treeType = = DUAL_TREE_CHROMA) { | |
| **tu_cbf_cb**[ x0 ][ y0 ] | ae(v) |
| **tu_cbf_cr**[ x0 ][ y0 ] | ae(v) |
| } | |
| if((((CuPredMode[ x0 ][ y0] = = MODE_INTRA) && sps_mts_intra_ enabled_flag) \|\| ((CuPredMode[ x0][ y0] = = MODE_INTER) && sps_mts_inter_enabled_flag)) && tu_cbf_luma[ x0][ y0] && treeType ! = DUAL_TREE_CHROMA && (tbWidth <= 32) && (tbHeight <= 32)) | |
| **cu_mts_flag**[x0 ][ y0 ] | ae(v) |
| if( tu_cbf_luma[ x0 ][ y0]) | |
| residual_coding(x0, y0, log2(tbWidth), log2(tbHeight), 0) | |
| if(tu_cbf_cb[ x0 ][ y0]) | |
| residual_coding( x0, y0, log2( tbWidth/2), log2( tbHeight/2), 1) | |
| if(tu_cbf_cr[ x0 ][ y0]) | |
| residual_coding( x0, y0, log2( tbWidth/2), log2( tbHeight / 2), 2) | |
| } | |

[Table 15]

| cu_mts_flag[ x0][y0] equal to 1 specifies that multiple transform selection is applied to the residual samples of the associated luma transform block. cu_mts_flag[x0][y0] equal to 0 specifies that multiple transform selection is not applied to the residual samples of the associated luma transform block. The array indices x0, y0 specify the location (x0, y0) of the top-left luma sample of the considered transform block relative to the top-left luma sample of the picture. |
|---|
| When cu_mts_flag[x0][y0] is not present, it is inferred to be equal to 0. |

Furthermore, in an embodiment of the present disclosure, as represented in Table 12 and Table 14 above, information representing a transform kernel used in the multiple transform selection may be signaled based on the information (e.g., sps_mts_intra_enabled_flag, sps_mts_inter_enabled_flag) representing whether multiple transform selection is available or the information (e.g., cu_mts_flag) representing whether multiple transform selection is applied. Table 16 below represents an example of a syntax table for signaling information representing a transform kernel applied in the multiple transform selection. Table 17 represents an example of a Semantics table that defines information represented by the syntax elements of Table 16.

[Table 16]

| residual_coding( x0, y0, log2TbWidth, log2TbHeight, cIdx) { | Descriptor |
|---|---|
| if( transform_skip_enabled_flag && (cIdx ! = 0 \|\| cu_mts_flag[ x0][ y0] = = 0) && (log2TbWidth <= 2) && (log2TbHeight <= 2)) | |
| **transform_skip_flag**[x0 ][ y0 ][cIdx] | ae(v) |
| **last_sig_coeff_x_prefix** | ae(v) |
| **last_sig_coeff_y_prefix** | ae(v) |

(continued)

| residual_coding( x0, y0, log2TbWidth, log2TbHeight, cIdx) { | Descriptor |
|---|---|
| if( last_sig_coeff_ x_prefix > 3) | |
| **last_sig_coeff_x_suffix** | ae(v) |
| if( last_sig_coeff_y_prefix > 3) | |
| **last_sig_coeff_y_suffix** | ae(v) |
| log2SbSize = (Min(log2TbWidth, log2TbHeight) < 2 ? 1 2) | |
| numSbCoeff = 1 << (log2SbSize << 1) | |
| lastScanPos = numSbCoeff | |
| lastSubBlock = (1 << (log2TbWidth + log2TbHeight - 2 * log2SbSize )) - 1 | |
| do { | |
| if(lastScanPos = = 0) { | |
| lastScanPos = numSbCoeff | |
| lastSubBlock- - | |
| } | |
| lastScanPos- - | |
| xS = DiagScanOrder[log2TbWidth - log2SbSize ][ log2TbHeight - log2SbSize ] [ lastSubBlock ] [0] | |
| yS = DiagScanOrder[log2TbWidth - log2SbSize ][ log2TbHeight - log2SbSize ] [ lastSubBlock ][1] | |
| xC = ( xS << log2SbSize ) + DiagScanOrder[log2SbSize ][ log2SbSize ][ lastScanPos ][0] | |
| yC = (yS << log2SbSize ) + DiagScanOrder[log2SbSize ][ log2SbSize ][ lastScanPos ][1] | |
| } while((xC != LastSignificantCoeffX) \|\| (yC != LastSignificantCoeffY)) | |
| QState = 0 | |
| for(i = lastSubBlock; i >= 0; i-- ) { | |
| startQStateSb = QState | |
| xS = DiagScanOrder[log2TbWidth - log2SbSize ][ log2TbHeight - log2SbSize ] [ lastSubBlock ] [ 0] | |
| yS = DiagScanOrder[log2TbWidth - log2SbSize ][ log2TbHeight - log2SbSize ] [ lastSubBlock ] [1] | |
| inferSbDcSigCoeffFlag = 0 | |
| if((i<lastSubBlock) && (i>0)) { | |
| **coded_sub_block_flag**[ xS ] [ yS ] | ae(v) |
| inferSbDcSigCoeffFlag = 1 | |
| } | |
| firstSigScanPosSb = numSbCoeff | |
| lastSigScanPosSb = -1 | |
| for(n = (i = = lastSubBlock) ? lastScanPos - 1 : numSbCoeff - 1; n >= 0; n--) { | |
| xC = (xS << log2SbSize ) + DiagScanOrder[log2SbSize ][ log2SbSize ][ n ][0] | |
| yC = (yS << log2SbSize) + DiagScanOrder[log2SbSize][log2SbSize][n][1] | |

| | |
|---|---|
| if( coded_sub_block_flag[ xS ][ yS] && (n>0 \|\| !inferSbDcSigCoeffFlag)) | |
| **sig_coeff_flag**[xC ][ yC ] | ae(v) |
| } | |
| if(sig_coeff_flag[xC][yC]) { | |
| **par_level_flag**[n ] | ae(v) |
| **rem_ abs_gt1_ flag**[n ] | ae(v) |
| if( lastSigScanPosSb = = -1) | |
| lastSigScanPosSb = n | |
| firstSigScanPosSb = n | |
| } | |
| AbsLevelPass1 [ xC][ yC ] = sig_coeff_flag[ xC ][ yC ] + par_level_ flag[ n] + 2 * rem_ abs_gt1_flag[ n ] | |
| if( dep_quant_ enabled flag) | |
| QState = QStateTransTable[QState][par_level_flag[n]] | |
| } | |
| for(n = numSbCoeff - 1; n >= 0; n- -) { | |
| if( rem_ abs_gt1_flag[ n]) | |
| **rem_abs_gt2_flag**[n ] | ae(v) |
| } | |
| for(n = numSbCoeff - 1; n >= 0; n- - ) { | |
| xC = (xS << log2SbSize ) + DiagScanOrder[log2SbSize ][ log2SbSize ][ n][0] | |
| yC = (yS << log2SbSize) + DiagScanOrder[log2SbSize][log2SbSize][n][1] | |
| if( rem_ abs_gt2_flag[ n ]) | |
| **abs_remainder**[n ] | |
| AbsLevel[xC][yC] = AbsLevelPassl[xC][yC]+ 2 * (rem_abs_gt2_flag[n]+abs_remainder[n]) | |
| } | |
| if(dep_quant_enabled_flag \|\| !sign_data_hiding_enabled_flag) | |
| signHidden = 0 | |
| else | |
| signHiddcn = ( lastSigScanPosSb - firstSigScanPosSb > 3 ? 1 : 0) | |
| for(n = numSbCoeff - 1; n >= 0; n- -) { | |
| xC = (xS << log2SbSize ) + DiagScanOrder[log2SbSize ][ log2SbSize ][ n][0] | |
| yC = (yS << log2SbSize) + DiagScanOrder[log2SbSize][log2SbSize][n][1] | |
| if(sig_coeff_flag[ xC][ yC] && (!signHidden \|\| (n != firstSigScanPosSb ))) | |
| **coeff_sign_flag**[n ] | ae(v) |
| } | |
| if( dep_quant_ enabled_flag) { | |
| QState = startQStateSb | |
| for(n = numSbCoeff - 1; n >= 0; n- -) { | |
| xC = (xS << log2SbSize ) + DiagScanOrder[log2SbSize ][ log2SbSize ][ n][ 0] | |

24

(continued)

| | |
|---|---|
| yC = (yS << log2SbSize) + DiagScanOrder[log2SbSize ][ log2SbSize ][ n][ 1 ] | |
| if(sig_coeff_flag[ xC ][ yC ]) | |

| | |
|---|---|
| TransCoeffLevel[x0][y0][cIdx][xC][yC]= (2*AbsLevel[xC[xC][yC] - (QState > 1 ? 1 : 0)) * (1 - 2 * coeff_sign_flag[n]) | |
| QState = QStateTransTable[QState][par_level_flag[n]] | |
| } else { | |
| sumAbsLevel = 0 | |
| for(n = numSbCoeff - 1; n >= 0; n- -) { | |
| xC = (xS << log2SbSize ) + DiagScanOrder[log2SbSize ][ log2SbSize ][ n ][0] | |
| yC = (yS << log2SbSize ) + DiagScanOrder[log2SbSize ][ log2SbSize ][ n ][1] | |
| if( sig_coeff_flag[ xC ] [ yC ]) { | |
| TransCoeffLevel[x0 ][ y0 ][cIdx][ xC ][ yC ] = *AbsLevel[xCxC ][ yC ]*(1 - 2 * coeff_sign_ flag [n ]) | |
| if( signHidden) { | |
| sumAbsLevel += AbsLevel[xCxC ] [ yC ] | |
| if((n = = firstSigScanPosSb) && (sumAbsLevel % 2) = = 1)) | |
| TransCoeffLevel[x0 ][ y0 ][cIdx][ xC ] [ yC ] = -TransCoeffLevel[ x0 ][ y0 ][cIdx] [ xC ][ yC ] | |
| } | |
| } | |
| } | |
| } | |
| } | |
| if(cu_mts_flag[x0][y0] && (cIdx = = 0) && !transform_skip_flag[x0][y0][cIdx] && ((CuPredMode[x0][y0] = = MODE_INTRA && numSigCoeff > 2) \|\| (CuPredMode[x0][y0] = = MODE_INTER))){ | |
| **mts_idx**[x0 ][ y0 ] | ae (v) |
| } | |

[Table 17]

| |
|---|
| **mts_idx**[x0][y0] specifies which transform kernels are applied to the luma residual samples along the horizontal and vertical direction of the current transform block. The array indices x0, y0 specify the location (x0, y0) of the top-left luma sample of the considered transform block relative to the top-left luma sample of the picture. |
| When mts_idx[x0][y0] is not present, it is inferred to be equal to -1. |

Referring to Table 16 and Table 17 above, as the information representing a transform kernel used in the multiple transform selection, mts_idx syntax element may be used. The mts_idx syntax element may be set to an index value that indicates a combination applied to a current block among specific combinations configured for a horizontal directional transform and a vertical directional transform used in the multiple transform like the transform set described above.

For example, in the case that it is explicitly indicated that the multiple transform selection is applied for the current block through the syntax elements such as sps_mts_intra_enabled_flag, sps_mts_inter_enabled_flag, and cu_mts_flag, the mts_idx syntax element may be transferred through a residual coding syntax or a transform unit syntax which is a level for signaling information required to perform a transform of the current block. The decoding apparatus may obtain the mts_idx syntax element from the encoding apparatus and derive transform kernels (horizontal directional transform kernel and vertical directional transform kernel) applied to the current block based on the index value indicated by the mts idx, and then, perform the multiple transform.

In this case, combinations of the horizontal directional transform kernel and the vertical directional transform kernel used for the multiple transform selection may be predetermined, and each of the combinations may correspond to index values of the mts idx, respectively. Accordingly, the decoding apparatus may select a combination corresponding to the index value of the mts_idx among the predetermined combinations of the horizontal directional transform kernel and the vertical directional transform kernel and derive the horizontal directional transform kernel and the vertical directional transform kernel of the selected combination as a transform kernel set to be applied to the current block.

Meanwhile, according to an embodiment of the present disclosure, combinations of transform kernels used for the multiple transform selection may be configured in various schemes. Here, the combinations of transform kernels may also be referred to as multiple transform selection candidates (hereinafter, MTS candidates). In addition, the combinations of transform kernels (i.e., MTS candidates) represents the multiple transform kernel sets, and the multiple transform kernel sets may be derived by combining a transform kernel type corresponding to a vertical transform kernel and a transform kernel type corresponding to a horizontal transform kernel. In this case, the number of transform kernel types used for the multiple transform selection may be plural, and in this case, the transform kernel type corresponding to the vertical transform kernel may be one of the plurality of transform kernel types, and the transform kernel type corresponding to the horizontal transform kernel may be one of the plurality of transform kernel types. In other words, the multiple transform kernel sets (i.e., MTS candidates) may be constructed by combining a plurality of transform kernel types. For example, as the transform kernel types used for the multiple transform selection, DST7, DCT8, DCT2, DST1, DCT5, and the like may be used. A plurality of these types is selected, and a plurality of selected types is combined, and then, configured as the multiple transform kernel sets (i.e., MTS candidates). The multiple transform kernel sets (i.e., MTS candidates) may be constructed in various manners considering a transform efficiency.

In constructing MTS candidates, according to an embodiment of the present disclosure, a plurality of MTS candidates is constructed by using DST7 and DCT8 as a transform kernel type and combined, and an MTS index value (e.g., mts_idx) may be allocated corresponding to each of the plurality of MTS candidates.

In an embodiment, for a first index value (e.g., index value 0) of the MTS index, DST7 is selected for all of the transform kernel types corresponding to the vertical transform kernel and the horizontal transform kernel, and the combined MTS candidate (i.e., transform kernel set) may be mapped. For a second index value (e.g., index value 1), the transform kernel types corresponding to the vertical transform kernel is selected as DST7, the transform kernel types corresponding to the horizontal transform kernel is selected as DCT8, and the combined MTS candidate (i.e., transform kernel set) may be mapped. For a third index value (e.g., index value 2), the transform kernel types corresponding to the vertical transform kernel is selected as DCT8, the transform kernel types corresponding to the horizontal transform kernel is selected as DCS7, and the combined MTS candidate (i.e., transform kernel set) may be mapped. For a fourth index value (e.g., index value 3), DCT8 is selected for all of the transform kernel types corresponding to the vertical transform kernel and the horizontal transform kernel, and the combined MTS candidate (i.e., transform kernel set) may be mapped. The MTS candidates combined as such may be represented by the transform kernel type corresponding to the vertical transform kernel and the horizontal transform kernel according to the MTS index value as represented in Table 18 below.

[Table 18]

| mts_idx[x][y] | CuPredMode[ x ][ y ] = = Non Angular mode | |
|---|---|---|
| | trTypeHor | trType Ver |
| -1 (inferred) | 0 | 0 |
| 0 (00) | 1 | 1 |
| 1 (01) | 2 | 1 |
| 2 (10) | 1 | 2 |
| 3 (11) | 2 | 2 |

In another embodiment, for a first index value (e.g., index value 0) of the MTS index, DST7 is selected for all of the transform kernel types corresponding to the vertical transform kernel and the horizontal transform kernel, and the combined MTS candidate (i.e., transform kernel set) may be mapped. For a second index value (e.g., index value 1), the transform kernel types corresponding to the vertical transform kernel is selected as DCT8, the transform kernel types corresponding to the horizontal transform kernel is selected as DST7, and the combined MTS candidate (i.e., transform kernel set) may be mapped. The MTS candidates combined as such may be represented by the transform kernel type corresponding to the vertical transform kernel and the horizontal transform kernel according to the MTS index value as represented in Table 19 below.

[Table 19]

| mts_idx[x][y] | CuPredMode[ x][ y ] = = Horizontal mode | |
|---|---|---|
| | trTypeHor | trTypeVer |
| - 1 (inferred) | 0 | 0 |
| 0 (0) | 1 | 1 |
| 1 (1) | 1 | 2 |

In another embodiment, for a first index value (e.g., index value 0) of the MTS index, DST7 is selected for all of the transform kernel types corresponding to the vertical transform kernel and the horizontal transform kernel, and the combined MTS candidate (i.e., transform kernel set) may be mapped. For a second index value (e.g., index value 1), the transform kernel types corresponding to the vertical transform kernel is selected as DST7, the transform kernel types corresponding to the horizontal transform kernel is selected as DCT8, and the combined MTS candidate (i.e., transform kernel set) may be mapped. The MTS candidates combined as such may be represented by the transform kernel type corresponding to the vertical transform kernel and the horizontal transform kernel according to the MTS index value as represented in Table 20 below.

[Table 20]

| mts_idx[x][y] | CuPredMode[ x][ y ] = = Vertical mode | |
|---|---|---|
| | trTypeHor | trTypeVer |
| - 1 (inferred) | 0 | 0 |
| 0 (0) | 1 | 1 |
| 1 (1) | 2 | 1 |

Referring to Table 18 to Table 20, the transform kernel type corresponding to the vertical transform kernel and the transform kernel type corresponding to the horizontal transform kernel are mapped according to the index value of the MTS index. Here, the case that the transform kernel type value is 1 indicates DST7, and the case that the transform kernel type value is 2 indicates DCT8. In some cases, there is a case that the MTS index syntax element is not signaled. That is, in the case that a transform based on MTS is determined to be unavailable (e.g., the case that sps_mts_intra_enabled_flag or sps_mts_inter_enabled_flag is 0) or a transform based on MTS is determined to be not applied (e.g. the case that cu_mts_flag is 0), the MTS index information may not be present. In this case, the decoding apparatus may infer a value of the MTS index as -1 as represented in Table 18 to Table 20 above, and the corresponding transform kernel type 0 may be used as the transform kernel type (i.e., vertical transform kernel and horizontal transform kernel) of the current block. In this case, transform kernel type 0 may indicate DCT2.
In addition, according to an embodiment of the present disclosure, the MTS candidates may be constructed considering a directionality of an intra prediction mode.
In an embodiment, in the case that 67 intra prediction modes are applied, the four MTS candidates represented in Table 18 above may be used for two non-directional mode (e.g., DC mode, planar mode), the two MTS candidates represented in Table 19 above may be used for a horizontal group mode (e.g., number 2 mode to number 34 mode) including the modes having a horizontal directionality, and the two MTS candidates represented in Table 20 above may be used for a vertical group mode (e.g., number 35 mode to number 66 mode) including the modes having a vertical directionality.
In another embodiment, in the case that 67 intra prediction modes are applied, three MTS candidates represented in Table 21 below may be used for two non-directional mode (e.g., DC mode, planar mode), two MTS candidates represented in Table 22 below may be used for a horizontal group mode (e.g., number 2 mode to number 34 mode) including the modes having a horizontal directionality, and two MTS candidates represented in Table 23 below may be used for a vertical group mode (e.g., number 35 mode to number 66 mode) including the modes having a vertical directionality.

Table 21 below represents an example of a transform kernel type corresponding to the vertical transform kernel and the horizontal transform kernel according to an MTS index value as the MTS candidates used for two non-directional mode (e.g., DC mode, planar mode).

[Table 21]

| mts_idx[x][y] | CuPredMode[ x][ y ] = = Non angular mode | |
|---|---|---|
| | trTypeHor | trType Ver |
| - 1 (inferred) | 0 | 0 |
| 0 (0) | 1 | 1 |
| 1 (10) | 2 | 1 |
| 2 (11) | 1 | 2 |

Referring to Table 21 above, for a first index value (e.g., index value 0) of the MTS index, DST7 is selected for all of the transform kernel types corresponding to the vertical transform kernel and the horizontal transform kernel, and the combined MTS candidate (i.e., transform kernel set) may be mapped. For a second index value (e.g., index value 1), the transform kernel types corresponding to the vertical transform kernel is selected as DST7, the transform kernel types corresponding to the horizontal transform kernel is selected as DCT8, and the combined MTS candidate (i.e., transform kernel set) may be mapped. For a third index value (e.g., index value 2), the transform kernel types corresponding to the vertical transform kernel is selected as DCT8, the transform kernel types corresponding to the horizontal transform kernel is selected as DST7, and the combined MTS candidate (i.e., transform kernel set) may be mapped.

Table 22 below represents an example of a transform kernel type corresponding to the vertical transform kernel and the horizontal transform kernel according to an MTS index value as the MTS candidates used for a horizontal group mode (e.g., number 2 mode to number 34 mode) including the modes having a horizontal directionality.

[Table 22]

| mts_idx[x][y] | CuPredMode[ x][ y ] = = Horizontal mode | |
|---|---|---|
| | trTypeHor | trTypeVer |
| - 1 (inferred) | 0 | 0 |
| 0 (0) | 1 | 1 |
| 1 (1) | 1 | 2 |

Referring to Table 22 above, for a first index value (e.g., index value 0) of the MTS index, DST7 is selected for all of the transform kernel types corresponding to the vertical transform kernel and the horizontal transform kernel, and the combined MTS candidate (i.e., transform kernel set) may be mapped. For a second index value (e.g., index value 1), the transform kernel types corresponding to the vertical transform kernel is selected as DCT8, the transform kernel types corresponding to the horizontal transform kernel is selected as DST7, and the combined MTS candidate (i.e., transform kernel set) may be mapped.

Table 23 below represents an example of a transform kernel type corresponding to the vertical transform kernel and the horizontal transform kernel according to an MTS index value as the MTS candidates used for a vertical group mode (e.g., number 35 mode to number 66 mode) including the modes having a vertical directionality.

[Table 23]

| mts_idx[x][y] | CuPredMode[ x ][ y ] = = Vertical mode | |
|---|---|---|
| | trTypeHor | trTypeVer |
| - 1 (inferred) | 0 | 0 |
| 0 (0) | 1 | 1 |
| 1 (1) | 2 | 1 |

Referring to Table 23 above, for a first index value (e.g., index value 0) of the MTS index, DST7 is selected for all of the transform kernel types corresponding to the vertical transform kernel and the horizontal transform kernel, and the combined MTS candidate (i.e., transform kernel set) may be mapped. For a second index value (e.g., index value 1), the transform kernel types corresponding to the vertical transform kernel is selected as DST7, the transform kernel types corresponding to the horizontal transform kernel is selected as DCT8, and the combined MTS candidate (i.e., transform kernel set) may be mapped.

Referring to Table 21 to Table 23, the case that the transform kernel type value is 1 indicates DST7, and the case that the transform kernel type value is 2 indicates DCT8. In some cases, there is a case that the MTS index syntax element is not signaled. That is, in the case that a transform based on MTS is determined to be unavailable (e.g., the case that sps_mts_intra_enabled_flag or sps_mts_inter_enabled_flag is 0) or a transform based on MTS is determined to be not applied (e.g. the case that cu_mts_flag is 0), the MTS index information may not be present. In this case, the decoding apparatus may infer a value of the MTS index as -1 as represented in Table 21 to Table 23 above, and the corresponding transform kernel type 0 may be used as the transform kernel type (i.e., vertical transform kernel and horizontal transform kernel) of the current block. In this case, transform kernel type 0 may indicate DCT2.

Of course, according to the present disclosure, the MTS candidates may be constructed for all intra prediction modes without considering a directionality of an intra prediction mode. In an embodiment, three MTS candidates may be constructed for all intra prediction modes, and an MTS index value (e.g., mts_idx) may be applied with corresponding to the three MTS candidates.

For example, for a first index value (e.g., index value 0) of the MTS index, DST7 is selected for all of the transform kernel types corresponding to the vertical transform kernel and the horizontal transform kernel, and the combined MTS candidate (i.e., transform kernel set) may be mapped. For a second index value (e.g., index value 1), the transform kernel types corresponding to the vertical transform kernel is selected as DST7, the transform kernel types corresponding to the horizontal transform kernel is selected as DCT8, and the combined MTS candidate (i.e., transform kernel set) may be mapped. For a third index value (e.g., index value 2), the transform kernel types corresponding to the vertical transform kernel is selected as DCT8, the transform kernel types corresponding to the horizontal transform kernel is selected as DST7, and the combined MTS candidate (i.e., transform kernel set) may be mapped. The MTS candidates combined as such may be represented by the transform kernel type corresponding to the vertical transform kernel and the horizontal transform kernel according to the MTS index value as represented in Table 24 below.

[Table 24]

| mts_idx[x][y] | CuPredMode[ x ][ y ] = = MODE INTRA | |
|---|---|---|
| | trTypeHor | trTypeVer |
| - 1 (inferred) | 0 | 0 |
| 0 (0) | 1 | 1 |
| 1 (10) | 2 | 1 |
| 2 (11) | 1 | 2 |

Referring to Table 24 above, the transform kernel type corresponding to the vertical transform kernel and the transform kernel type corresponding to the horizontal transform kernel are mapped according to the index value of the MTS index. Here, the case that the transform kernel type value is 1 indicates DST7, and the case that the transform kernel type value is 2 indicates DCT8. In some cases, there is a case that the MTS index syntax element is not signaled. That is, in the case that a transform based on MTS is determined to be unavailable (e.g., the case that sps_mts_intra_enabled_flag or sps_mts_inter_enabled_flag is 0) or a transform based on MTS is determined to be not applied (e.g. the case that cu_mts_flag is 0), the MTS index information may not be present. In this case, the decoding apparatus may infer a value of the MTS index as -1 as represented in Table 24 above, and the corresponding transform kernel type 0 may be used as the transform kernel type (i.e., vertical transform kernel and horizontal transform kernel) of the current block. In this case, transform kernel type 0 may indicate DCT2.

In addition, according to the present disclosure, the MTS candidate(s) may be constructed for all prediction modes (i.e., intra prediction mode and inter prediction mode). In an embodiment, one MTS candidate is constructed for an intra prediction mode and an inter prediction mode, and an MTS index value (e.g., mts_idx) may be allocated. In this case, since one MTS candidate is constructed, flag information may be used instead of the MTX index to reduce the number of bits.

For example, in the case that flag information (e.g., cu_mts_flag) indicates 1, the transform kernel type indicated by one MTS candidate may be mapped. That is, in the case that flag information (e.g., cu_mts_flag) indicates 1, both of the transform kernel type corresponding to the vertical transform kernel and the transform kernel type corresponding to the horizontal transform kernel type may mapped to DST7.

Table 25 below represents an example in which transform kernel types corresponding to the vertical transform kernel and the horizontal transform kernel are mapped based on the flag information (e.g., cu_mts_flag).

[Table 25]

| cu_mts_flag[x][y] | CuPredMode[x][y] == MODE INTRA | | CuPredMode[x][y] == MODE INTER | |
|---|---|---|---|---|
| | trTypeHor | trType Ver | trTypeHor | trType Ver |
| 0 | 0 | 0 | 0 | 0 |
| 1 | 1 | 1 | 1 | 1 |

Referring to Table 25 above, in the case that flag information (e.g., cu_mts_flag) indicates 1, a value of 1 may be derived as both of the transform kernel types corresponding to the vertical transform kernel and the horizontal transform kernel without regard to a prediction mode (i.e., whether a prediction mode is an intra prediction mode or an inter prediction mode). Alternatively, in the case that flag information (e.g., cu_mts_flag) indicates 0, a value of 0 may be derived as both of the transform kernel types corresponding to the vertical transform kernel and the horizontal transform kernel. Here, the case that transform kernel type is 1 may mean the use of DST7, and the case that transform kernel type is 0 may mean the use of DCT2. As described above, in some cases, flag information (e.g., cu_mts_flag) may not be signaled. For example, in the case that a transform based on MTS is determined to be unavailable (e.g., the case that sps_mts_intra_enabled_flag or sps_mts_inter_enabled_flag is 0) or a transform based on MTS is determined to be not applied (e.g. the case that cu_mts_flag is 0), the flag information (e.g., cu_mts_flag) may not be signaled. In this case, the decoding apparatus may infer a value of the flag information (e.g., cu_mts_flag) as 0 as represented in Table 18 to Table 25 above, and the corresponding transform kernel type 0 may be used as the transform kernel type (i.e., vertical transform kernel and horizontal transform kernel) of the current block.

In the embodiments described above, it has been described that DST7 and DCT8 are used as the transform kernel type, but this is just an example. According to the present disclosure, a transform kernel set for the multiple transform selection may be constructed by using various transform kernel types (e.g., DCT2, DCT4, DCT5, DCT7, DCT8, DST1, DST4, DST7, etc.), and the multiple transform may be performed.

Meanwhile, the DCT/DST transform kernel types such as DCT2, DCT4, DCT5, DCT7, DCT8, DST1, DST4, DST7, and the like may be defined based on basis functions, and the basis functions may be represented as Table 26 below. The transform kernel type described in the present disclosure may also be referred to as a transform type.

[Table 26]

| Transform Type | Basis function $T_i(j)$, $i,j = 0, 1, \ldots, N-1$ |
|---|---|
| DCT-II | where $T_i(j) = \omega_0 \cdot \sqrt{\dfrac{2}{N}} \cdot \cos\left(\dfrac{\pi \cdot i \cdot (2j+1)}{2N}\right)$; $\omega_0 = \begin{cases} \sqrt{\dfrac{2}{N}} & i = 0 \\ 1 & i \neq 0 \end{cases}$ |
| DCT-V | where $T_i(j) = \omega_0 \cdot \omega_1 \cdot \sqrt{\dfrac{2}{2N-1}} \cdot \cos\left(\dfrac{2\pi \cdot i \cdot j}{2N-1}\right)$; $\omega_0 = \begin{cases} \sqrt{\dfrac{2}{N}} & i = 0 \\ 1 & i \neq 0 \end{cases}$, $\omega_1 = \begin{cases} \sqrt{\dfrac{2}{N}} & j = 0 \\ 1 & j \neq 0 \end{cases}$ |
| DCT-VIII | $T_i(j) = \sqrt{\dfrac{4}{2N+1}} \cdot \cos\left(\dfrac{\pi \cdot (2i+1) \cdot (2j+1)}{4N+2}\right)$ |

(continued)

| Transform Type | Basis function $T_i(j)$, $i,j=0, 1,..., N\text{-}1$ |
|---|---|
| DST-I | $T_i(j) = \sqrt{\dfrac{2}{N+1}} \cdot \sin\left(\dfrac{\pi \cdot (i+1) \cdot (j+1)}{N+1}\right)$ |
| DST-VII | $T_i(j) = \sqrt{\dfrac{4}{2N+1}} \cdot \sin\left(\dfrac{\pi \cdot (2i+1) \cdot (j+1)}{2N+1}\right)$ |

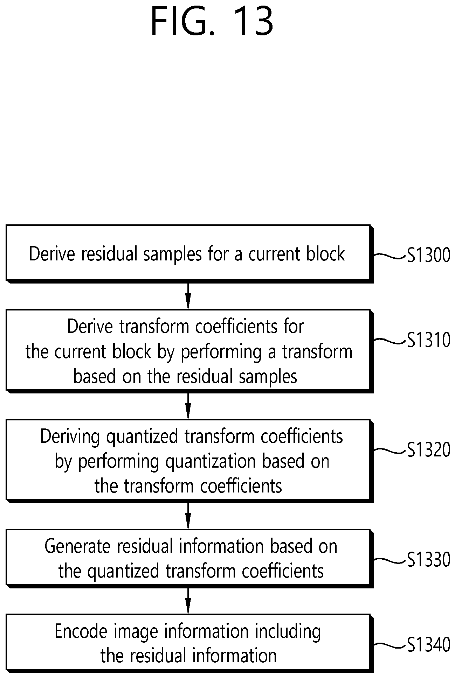

FIG. 13 is a flowchart schematically illustrating a video/image encoding method by an encoding apparatus according to an embodiment of the present disclosure.

The method shown in FIG. 13 may be performed by the encoding apparatus 200 described as shown in FIG. 2. Particularly, step S1300 shown in FIG. 13 may be performed by the predictor 220 and the subtractor 231 shown in FIG. 2, step S1310 shown in FIG. 13 may be performed by the transformer 232 shown in FIG. 2, steps S1320 and S1330 shown in FIG. 13 may be performed by the quantizer 233 shown in FIG. 2, and step S1340 shown in FIG. 13 may be performed by the entropy encoder 240 shown in FIG. 2. In addition, the method shown in FIG. 13 may include the embodiments described above in the present disclosure. Accordingly, the detailed description for the contents overlapped with the embodiments described above is omitted or briefly described in FIG. 13.

Referring to FIG. 13, the encoding apparatus may derive residual samples for a current block (step, S1300).

In an embodiment, the encoding apparatus may perform a prediction based on an intra prediction mode (e.g., intra prediction mode or inter prediction mode) applied to a current block and derive prediction samples of the current block. In addition, the encoding apparatus may derive residual samples of the current block based on original samples and the prediction samples for the current block. The residual samples may be derived based on a difference between the original samples and the prediction samples.

The encoding apparatus may derive transform coefficients for the current block by performing a transform based on the residual samples of the current block (step, S1310). In this case, the encoding apparatus may perform a transform by applying the multiple transform selection (hereinafter, MTS).

In an embodiment, when the encoding apparatus performs a transform based on the MTS, the encoding apparatus may perform a transform by using a transform kernel set applied to the current block. Furthermore, the encoding apparatus may generate information for MTS that represents the transform kernel set applied to the current block and encode it, and then transmit the encoded information to the decoding apparatus. Here, the information for MTS may include MTS index information for indicating the transform kernel set applied to the current block.

More particularly, in the case that the encoding apparatus decides to perform a transform based on the MTS for the residual samples of the current block, the encoding apparatus may perform a transform for a plurality of MTS candidates and may select an optimal MTS candidate among the plurality of MTS candidates based on a Rate Distortion (RD) cost. In addition, the encoding apparatus may generate the MTS index information that corresponds to the selected optimal MTS candidate and encode the information for MTS that includes the MTS index information.

Here, the plurality of MTS candidates is constructed by including combinations of the vertical transform kernel and the horizontal transform kernel, and for example, may include the embodiments disclosed in Table 18 to Table 25 above. In other words, the plurality of MTS candidates may represent multiple transform kernel sets, and the multiple transform kernel sets may be derived by combining a transform kernel type corresponding to the vertical transform kernel and a transform kernel type corresponding to the horizontal transform kernel. Furthermore, the transform kernel type corresponding to the vertical transform kernel may be one of the plurality of MTS candidates, and the transform kernel type corresponding to the horizontal transform kernel may also be one of the plurality of MTS candidates. For example, the transform kernel types that may be used in the MTS may include DCT2, DCT4, DCT5, DCT7, DCT8, DST1, DST4, DST7, and the like. Among these transform kernel types, a plurality of transform kernel types (e.g., DST7 and DCT8) are combined, and a multiple transform kernel set (vertical transform kernel and horizontal transform kernel) is derived.

In an embodiment, a plurality of transform kernel types may include a first transform kernel type and a second transform kernel type. In this case, a plurality of MTS candidates may include an MTS candidate including the vertical transform kernel and the horizontal transform kernel that correspond to the first transform kernel type, an MTS candidate including the vertical transform kernel that corresponds to the first transform kernel type and the horizontal transform kernel that correspond to the second transform kernel type, an MTS candidate including the vertical transform kernel that corresponds to the second transform kernel type and the horizontal transform kernel that corresponds to the first transform kernel type, and an MTS candidate including the vertical transform kernel and the horizontal transform kernel that correspond to the second transform kernel type. In this case, the first transform kernel type and the second transform kernel type may be the transform kernel types that correspond to a predetermined transform matrix. For example, the first transform kernel type may be predetermined as DST type 7, and the second transform kernel type may be predetermined as DCT type 8.

In addition, a plurality of MTS candidates may be mapped to MTS index information. For example, in the case that the MTS index information indicates a first index value (e.g., index value 0), the transform kernel type corresponding to the vertical transform kernel may be DST type 7, and the transform kernel type corresponding to the horizontal transform kernel may be DST type 7. In the case that the MTS index information indicates a second index value (e.g., index value 1), the transform kernel type corresponding to the vertical transform kernel may be DST type 7, and the transform kernel type corresponding to the horizontal transform kernel may be DCT type 8. In the case that the MTS index information indicates a third index value (e.g., index value 2), the transform kernel type corresponding to the vertical transform kernel may be DCT type 8, and the transform kernel type corresponding to the horizontal transform kernel may be DST type 7. In the case that the MTS index information indicates a fourth index value (e.g., index value 3), the transform kernel type corresponding to the vertical transform kernel may be DCT type 8, and the transform kernel type corresponding to the horizontal transform kernel may be DCT type 8. According to an embodiment, by considering a directionality of an intra prediction mode, a plurality of MTS candidates may be constructed and mapped to the MTS index information. For example, in the case that a prediction mode of the current block is a non-directional mode (e.g., DC mode or planar mode), as exemplified above, the transform kernel types that correspond to vertical and horizontal transform kernels are differently mapped to the first to fourth index values with each other, and the MTS candidates may be constructed. In other words, in the case that a prediction mode of the current block is a non-directional mode (e.g., DC mode or planar mode), a transform may be performed by using the vertical and horizontal transform kernels indicated by any one of the first to fourth index values. Such MTS candidate construction schemes are described above through Table 18 to Table 20 above.

That is, in performing a transform based on the MTS, the encoding apparatus may perform a transform for the current block by using the vertical transform kernel and the horizontal transform kernel included in the transform kernel set represented by the MTS candidate which is indicated by the MTS index information.

According to an embodiment, the encoding apparatus may determine whether to perform a transform based on the MTS for the current block and may generate the determined information as MTS flag information. For example, the MTS flag information may be the cu_mts_flag syntax element described in Table 14 and Table 15 above. The case that the MTS flag information (e.g., cu_mts_flag) is equal to 1 may represent that a transform based on the MTS for the current block is performed. The encoding apparatus may encode the information for MTS including the MTS flag information and transmit the information to the decoding apparatus. In this case, when the MTS flag information (e.g., cu_mts_flag) is set to 1, the encoding apparatus may encode and signal the MTS flag information for indicating the transform kernel set applied to the current block by including it to the information for MTS additionally.

In addition, according to an embodiment, the encoding apparatus may determine whether the multiple transform selection is available for the current block and generate the determined information as MTS availability flag information. In this case, the MTS availability flag information may be defined as MTS intra availability flag information and MTS inter availability flag information depending on a prediction mode. The MTS intra availability flag information may be the sps_mts_intra_enabled_flag syntax element described in Table 12 and Table 13 above and represent whether the MTS based transform is available for an intra coding block. The MTS inter availability flag information may be the sps_mts_inter_enabled_flag syntax element describedin Table 12 and Table 13 above and represent whether the MTS based transform is available for an inter coding block.

That is, in the case that the encoding apparatus determines that the current block is a block coded with an intra prediction mode and the multiple transform selection is available, the encoding apparatus may set the MTS intra availability flag information (i.e., sps_mts_intra_enabled_flag) equal to 1 and encode it. Alternatively, in the case that the encoding apparatus determines that the current block is a block coded with an inter prediction mode and the multiple transform selection is available, the encoding apparatus may set the MTS inter availability flag information (i.e., sps_mts_inter_enabled_flag) equal to 1 and encode it. In this case, the MTS intra availability flag information (i.e., sps_mts_intra_enabled_flag) and the MTS inter availability flag information (i.e., sps_mts_inter_enabled_flag) may be signaled in a sequence parameter set (SPS) level.

In addition, in the case that the encoding apparatus determines the multiple transform selection to be available (i.e., in the case that the MTS intra availability flag information or the MTS inter availability flag information is equal to 1), the encoding apparatus may encode and signal the MTS index information for indicating the transform kernel set applied to the current block. The MTS index information may be signaled through a residual coding syntax or a transform unit syntax.

As described above, the information for MTS may include at least one of the MTS flag information, the MTS intra availability flag information, and the MTS inter availability flag information as well as the MTS index information. In other words, the encoding apparatus may signal the MTS flag information, the MTS intra availability flag information, and the MTS inter availability flag information explicitly according to whether the multiple transform selection is available or whether multiple transform selection is applied, and further, may signal the MTS index information additionally according to the MTS flag information, the MTS intra availability flag information, and the MTS inter availability flag information. This may include the contents described in Table 12 to Table 17 above.

The encoding apparatus may perform quantization based on the transform coefficients of the current block and derive quantized transform coefficients (step, S1320), and the encoding apparatus may generate residual information based on the quantized transform coefficients (step, S1330).

The encoding apparatus may encode image information including the information for MTS and the residual information (step, S1340).

Here, the residual information may include value information, location information, and information such as a transform scheme, a transform kernel, and a quantization parameter of the quantized transform coefficients. The information for MTS may include the MTS index information, the MTS flag information, MTS intra availability flag information, and the MTS inter availability flag information, described above.

The encoded image information may be output in a bitstream format. The bitstream may be transmitted to the decoding apparatus through a network or a storage medium.

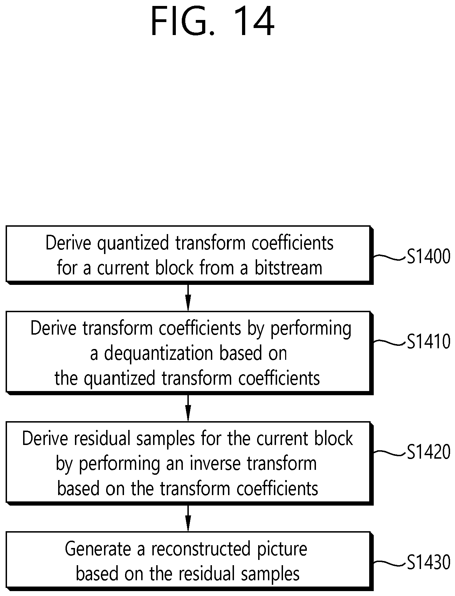

FIG. 14 is a flowchart schematically illustrating a video/image decoding method by a decoding apparatus according to an embodiment of the present disclosure.

The method shown in FIG. 14 may be performed by the decoding apparatus 300 described as shown in FIG. 3. Particularly, step S1400 shown in FIG. 14 may be performed by the entropy decoder 310 shown in FIG. 3, step S1410 shown in FIG. 14 may be performed by the dequantizer 321 shown in FIG. 3, steps S1420 shown in FIG. 14 may be performed by the inverse transformer 322 shown in FIG. 3, and step S1430 shown in FIG. 14 may be performed by the predictor 330 and the adder 340 shown in FIG. 3. In addition, the method shown in FIG. 14 may include the embodiments described above in the present disclosure. Accordingly, the detailed description for the contents overlapped with the embodiments described above is omitted or briefly described in FIG. 14.

Referring to FIG. 14, the decoding apparatus may derive quantized transform coefficients for a current block from a bitstream (step, S1400).

In an embodiment, the decoding apparatus may obtain and decode residual information from the bitstream and derive the quantized transform coefficients for the current block based on the residual information. Here, the residual information may include value information, location information, and information such as a transform scheme, a transform kernel, and a quantization parameter of the quantized transform coefficients.

The decoding apparatus may derive transform coefficients for the current block by performing a dequantization based on the quantized transform coefficients of the current block (step, S1410).

The decoding apparatus may derive residual samples for the current block by performing an inverse transform based on the transform coefficients of the current block (step, S1420). In this case, the decoding apparatus may perform an inverse transform by applying the multiple transform selection (hereinafter, MTS).

In an embodiment, the decoding apparatus may obtain and decode information for MTS from the bitstream and perform an inverse transform based on the transform kernel set which is derived based on the information for MTS. Here, the information for MTS may include MTS index information for indicating the transform kernel set applied to the current block.

More particularly, the decoding apparatus may obtain MTS index information included in the information for MTS and perform an inverse transform by using the vertical transform kernel and the horizontal transform kernel included in the transform kernel set represented by an MTS candidate which is indicated by the MTS index information. As described above, the MTS index information is information that indicatesan MTS candidate applied to the current block among a plurality of MTS candidates and signaled from the encoding apparatus.

Here, the plurality of MTS candidates is constructed by including combinations of the vertical transform kernel and the horizontal transform kernel, and for example, may include the embodiments disclosed in Table 18 to Table 25 above. In other words, the plurality of MTS candidates may represent multiple transform kernel sets, and the multiple transform kernel sets may be derived by combining a transform kernel type corresponding to the vertical transform kernel and a transform kernel type corresponding to the horizontal transform kernel. Furthermore, the transform kernel type corresponding to the vertical transform kernel may be one of the plurality of MTS candidates, and the transform kernel type corresponding to the horizontal transform kernel may also be one of the plurality of MTS candidates. For example, the transform kernel types that may be used in the MTS may include DCT2, DCT4, DCT5, DCT7, DCT8, DST1, DST4, DST7, and the like. Among these transform kernel types, a plurality of transform kernel types (e.g., DST7 and DCT8) are combined, and a multiple transform kernel set (vertical transform kernel and horizontal transform kernel) is derived.

In an embodiment, a plurality of transform kernel types may include a first transform kernel type and a second transform kernel type. In this case, a plurality of MTS candidates may include an MTS candidate including the vertical transform kernel and the horizontal transform kernel that correspond to the first transform kernel type, an MTS candidate including the vertical transform kernel that corresponds to the first transform kernel type and the horizontal transform kernel that correspond to the second transform kernel type, an MTS candidate including the vertical transform kernel that corresponds to the second transform kernel type and the horizontal transform kernel that corresponds to the first transform kernel type, and an MTS candidate including the vertical transform kernel and the horizontal transform kernel that correspond to the second transform kernel type. In this case, the first transform kernel type and the second transform kernel type may be the transform kernel types that correspond to a predetermined transform matrix. For example, the first transform kernel type may be predetermined as DST type 7, and the second transform kernel type may be predetermined as DCT type 8.

In addition, a plurality of MTS candidates may be mapped to MTS index information. For example, in the case that the MTS index information indicates a first index value (e.g., index value 0), the transform kernel type corresponding to the vertical transform kernel may be DST type 7, and the transform kernel type corresponding to the horizontal transform kernel may be DST type 7. In the case that the MTS index information indicates a second index value (e.g., index value 1), the transform kernel type corresponding to the vertical transform kernel may be DST type 7, and the transform kernel type corresponding to the horizontal transform kernel may be DCT type 8. In the case that the MTS index information indicates a third index value (e.g., index value 2), the transform kernel type corresponding to the vertical transform kernel may be DCT type 8, and the transform kernel type corresponding to the horizontal transform kernel may be DST type 7. In the case that the MTS index information indicates a fourth index value (e.g., index value 3), the transform kernel type corresponding to the vertical transform kernel may be DCT type 8, and the transform kernel type corresponding to the horizontal transform kernel may be DCT type 8. According to an embodiment, by considering a directionality of an intra prediction mode, a plurality of MTS candidates may be constructed and mapped to the MTS index information. For example, in the case that a prediction mode of the current block is a non-directional mode (e.g., DC mode or planar mode), as exemplified above, the transform kernel types that correspond to vertical and horizontal transform kernels are differently mapped to the first to fourth index values with each other, and the MTS candidates may be constructed. In other words, in the case that a prediction mode of the current block is a non-directional mode (e.g., DC mode or planar mode), a transform may be performed by using the vertical and horizontal transform kernels indicated by any one of the first to fourth index values. Such MTS candidate construction schemes are described above through Table 18 to Table 20 above.

That is, in performing an inverse transform based on the MTS, the decoding apparatus may perform an inverse transform for the current block by using the vertical transform kernel and the horizontal transform kernel included in the transform kernel set represented by the MTS candidate which is indicated by the MTS index information. For example, in the case that a prediction mode of the current block is a non-directional mode (e.g., DC mode or planar mode) and the MTS index information indicates the first index value, the decoding apparatus may derive DST type 7 as the transform kernel type corresponding to vertical and horizontal transform kernel types mapped to the first index value, and by applying it, may perform an inverse transform for the current block.

According to an embodiment, the decoding apparatus may obtain information (i.e., MTS flag information) on whether to perform an inverse transform based on the MTS for the current block from the bitstream. For example, the MTS flag information may be the cu_mts_flag syntax element described in Table 14 and Table 15 above. The case that the MTS flag information (e.g., cu_mts_flag) is equal to 1 may represent that an inverse transform based on the MTS for the current block is performed. Accordingly, the decoding apparatus may determine that an inverse transform based on the MTS for the current block is performed in the case that the MTS flag information (e.g., cu_mts_flag) is equal to 1, and may further include the MTS flag information from the bitstream.

In addition, according to an embodiment, the decoding apparatus may obtain information (i.e., MTS availability flag information) for indicating whether the multiple transform selection is available for the current block from the bitstream. In this case, the MTS availability flag information may be defined as MTS intra availability flag information and MTS inter availability flag information depending on a prediction mode. The MTS intra availability flag information may be the sps_mts_intra_enabled_flag syntax element described in Table 12 and Table 13 above and represent whether the MTS based transform is available for an intra coding block. The MTS inter availability flag information may be the sps_mts_inter_enabled_flag syntax element describedin Table 12 and Table 13 above and represent whether the MTS based transform is available for an inter coding block.

For example, in the case that the MTS intra availability flag information (i.e., sps_mts_intra_enabled_flag) is equal to 1 and a prediction mode of the current block is an intra prediction mode, the decoding apparatus may determine that the multiple transform selection is available for the current block, and may further obtain the MTS index information from the bitstream. Alternatively, in the case that the MTS inter availability flag information (i.e., sps_mts_inter_enabled_flag) is equal to 1 and a prediction mode of the current block is an inter prediction mode, the decoding apparatus may determine that the multiple transform selection is available for the current block, and may further obtain the MTS index information from the bitstream. In such a case, the decoding apparatus may derive the transform kernel set (vertical and horizontal transform kernels) indicated by the obtained MTS index information.

In the case that the MTS intra availability flag information (i.e., sps_mts_intra_enabled_flag) is equal to 0 and a prediction mode of the current block is an intra prediction mode, or in the case that the MTS inter availability flag information (i.e., sps_mts_inter_enabled_flag) is equal to 0 and a prediction mode of the current block is an inter prediction mode, the MTS index information is not signaled explicitly from the encoding apparatus. In this case, the decoding apparatus may apply a predefined transform kernel set (vertical and horizontal transform kernels). For example, the decoding apparatus may infer both of the transform kernel type for the horizontal transform kernel of the current block and the transform kernel type for the vertical transform kernel to be DCT type 2 and perform an inverse transform.

The MTS intra availability flag information (i.e., sps_mts_intra_enabled_flag) and the MTS inter availability flag information (i.e., sps_mts_inter_enabled_flag) may be signaled in a sequence parameter set (SPS) level. The MTS index information obtained in the case that the MTS intra availability flag information or the MTS inter availability flag information is equal to 1 may be signaled through a residual coding syntax level or a transform unit syntax level.

As described above, the information for MTS may include at least one of the MTS flag information, the MTS intra availability flag information, and the MTS inter availability flag information as well as the MTS index information. In other words, the decoding apparatus may obtain the MTS flag information, the MTS intra availability flag information, and the MTS inter availability flag information explicitly for the current block according to whether the multiple transform selection is available or whether multiple transform selection is applied. In addition, the decoding apparatus may explicitly obtain the MTS index information additionally according to the MTS flag information, the MTS intra availability flag information, and the MTS inter availability flag information through the corresponding level syntax. This may include the contents described in Table 12 to Table 17 above.

The decoding apparatus may generate a reconstructed picture based on the residual samples of the current block (step, S1430).

In an embodiment, the decoding apparatus may perform an inter prediction or an intra prediction based on the prediction mode of the current block and generate prediction samples of the current block. Furthermore, the decoding apparatus may add the prediction samples and the residual samples of the current block and obtain reconstructed samples. The decoding apparatus may reconstruct the current picture based on the reconstructed samples. Later, as occasion demands, in order to improve subjective/objective image quality, the decoding apparatus may apply the in-loop filtering process such as deblocking filtering, SAO and/or ALF process to the reconstructed picture as described above.

Meanwhile, the method of performing (inverse) transform based on the MTS described above in the present disclosure may be performed according to the spec as described in Table 27 below.

[Table 27]

| |
|---|
| **Transformation process for scaled transform coefficients** <br> **General** <br><br> Inputs to this process are: <br> - a luma location (xTbY, yTbY) specifying the top-left sample of the current luma transform block relative to the top-left luma sample of the current picture, <br> - a variable nTbW specifying the width of the current transform block, <br> - a variable nTbH specifying the height of the current transform block, <br> - a variable cIdx specifying the colour component of the current block, <br> - an (nTbW)x(nTbH) array d[x][y] of scaled transform coefficients with x = 0..nTbW - 1, y = 0..nTbH - 1. <br> Output of this process is the (nTbW)x(nTbH) array r[x][y] of residual samples with x = 0..nTbW - 1, y = 0..nTbH - 1. <br> The variable trTypeHor specifying the horizontal transform kernel and the variable trTypeVer specifying the vertical transform kernel are derived in Table 8-6 depending on mts_idx[x][y] and CuPredMode[x][y]. <br> The (nTbW)x(nTbH) array r of residual samples is derived as follows: <br> 1. Each (vertical) column of scaled transform coefficients d[x][y] with x = 0..nTbW - 1, y = 0..nTbH - 1 is transformed to e[x][y] with x = 0..nTbW - 1, y = 0..nTbH - 1 by invoking the one-dimensional transformation process as specified in clause 8.3.4.2 in VTM 2 for each column x = 0..nTbW - 1 with the height of the transform block nTbH, the list d[x][y] with y = 0..nTbH - 1 and the transform type variable trType set equal to trTypeVer as inputs, and the output is the list e[x][y] with y = 0..nTbH - 1. <br> 2. The intermediate sample values g[x][y] with x = 0..nTbW - 1, y = 0..nTbH - 1 are derived as follows: <br> g[x][y] = Clip3(CoeffMin, CoeffMax, (e[x][y] + 256) >> 9) (8-112) <br> 3. Each (horizontal) row of the resulting array g[x][y] with x = 0..nTbW - 1, y = 0..nTbH - 1 is transformed to r[x][y] with x = 0..nTbW - 1, y = 0..nTbH - 1 by invoking the one-dimensional transformation process as specified in clause 8.3.4.2 in VTM2 for each row y = 0..nTbH - 1 with the width of the transform block nTbW, the list g[x][y] with x = 0..nTbW - 1 and the transform type variable trType set equal to trTypeHor as inputs, and the output is the list r[x][y] with x = 0..nTbW - 1. <br><br> **Table 3.10 - Specification of trTypeHor and trTypeVer depending on mts_idx[x][y] and CuPredMode[x][y]** |

| mts_idx[x][y] | CuPredMode[x][y] = = MODE_INTRA | | CuPredMode[x][y] = = MODE_INTER | |
|---|---|---|---|---|
| | trTypeHor | trTypeVer | trTypeHor | trTypeVer |
| -1 (inferred) | 0 | 0 | 0 | 0 |
| 0 (00) | 1 | 1 | 2 | 2 |
| 1 (01) | 2 | 1 | 1 | 2 |
| 2 (10) | 1 | 2 | 2 | 1 |
| 3 (11) | 2 | 2 | 1 | 1 |
| The variable CuPredMode[x][y] indicates prediction mode of current CU. | | | | |

In the above-described embodiments, the methods are explained based on flowcharts by means of a series of steps or blocks, but the present disclosure is not limited to the order of steps, and a certain step may be performed in order or step different from that described above, or concurrently with another step. Further, it may be understood by a person having ordinary skill in the art that the steps shown in a flowchart are not exclusive, and that another step may be incorporated or one or more steps of the flowchart may be removed without affecting the scope of the present disclosure.

The above-described methods according to the present disclosure may be implemented as a software form, and an encoding apparatus and/or decoding apparatus according to the disclosure may be included in a device for image processing, such as, a TV, a computer, a smartphone, a set-top box, a display device or the like.

When embodiments in the present disclosure are embodied by software, the above-described methods may be embodied as modules (processes, functions or the like) to perform the above-described functions. The modules may be stored in a memory and may be executed by a processor. The memory may be inside or outside the processor and may be connected to the processor in various well-known manners. The processor may include an application-specific integrated circuit (ASIC), other chipset, logic circuit, and/or a data processing device. The memory may include a read-only memory (ROM), a random access memory (RAM), a flash memory, a memory card, a storage medium, and/or other storage device. That is, embodiments described in the present disclosure may be embodied and performed on a processor, a microprocessor, a controller or a chip. For example, function units shown in each drawing may be embodied and performed on a computer, a processor, a microprocessor, a controller or a chip. In this case, information for implementation (ex. information on instructions) or an algorithm may be stored in a digital storage medium.

Furthermore, the decoding apparatus and the encoding apparatus to which this document is applied may be included in a multimedia broadcasting transmission and reception device, a mobile communication terminal, a home cinema video device, a digital cinema video device, a camera for monitoring, a video dialogue device, a real-time communication device such as video communication, a mobile streaming device, a storage medium, a camcorder, a video on-demand (VoD) service provision device, an over the top (OTT) video device, an Internet streaming service provision device, a three-dimensional (3D) video device, a virtual reality (VR) device, an augmented reality (AR) device, a video telephony device, transportation means terminal (e.g., a vehicle (including autonomous vehicle) terminal, an aircraft terminal, and a vessel terminal), and a medical video device, and may be used to process a video signal or a data signal. For example, the over the top (OTT) video device may include a game console, a Blueray player, Internet access TV, a home theater system, a smartphone, a tablet PC, and a digital video recorder (DVR).

Furthermore, the processing method to which this document is applied may be produced in the form of a program executed by a computer, and may be stored in a computer-readable recording medium. Multimedia data having a data structure according to this document may also be stored in a computer-readable recording medium. The computer-readable recording medium includes all types of storage devices in which computer-readable data is stored. The computer-readable recording medium may include Blueray disk (BD), a universal serial bus (USB), a ROM, a PROM, an EPROM, an EEPROM, a RAM, a CD-ROM, a magnetic tape, a floppy disk, and an optical data storage device, for example. Furthermore, the computer-readable recording medium includes media implemented in the form of carriers (e.g., transmission through the Internet). Furthermore, a bit stream generated using an encoding method may be stored in a computer-readable recording medium or may be transmitted over wired and wireless communication networks.

Furthermore, an embodiment of this document may be implemented as a computer program product using program code. The program code may be performed by a computer according to an embodiment of this document. The program code may be stored on a carrier readable by a computer.

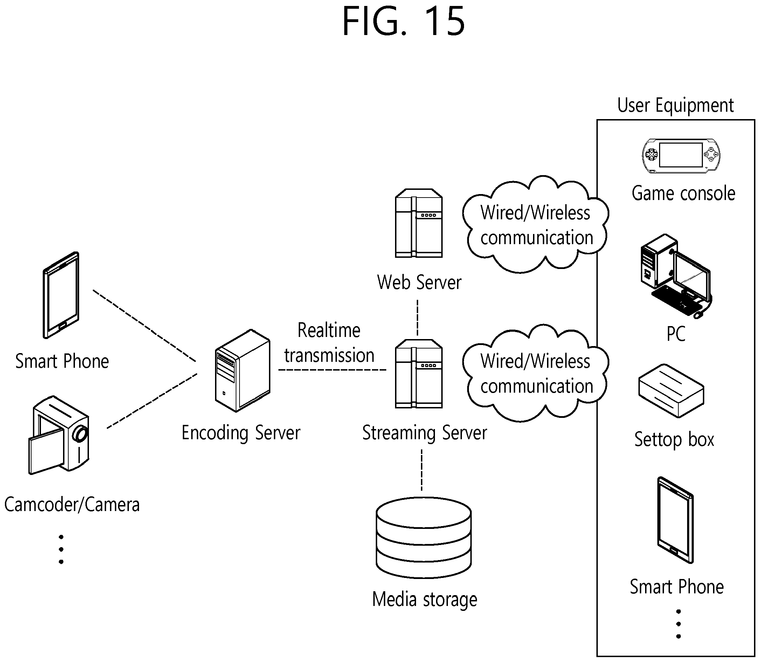

FIG. 15 illustrates an example of a content streaming system to which embodiments disclosed in this document may be applied.

Referring to FIG. 15, the content streaming system to which the embodiments of the present document are applied may basically include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmit the bitstream to the streaming server. As another example, when the multimedia input devices such as smartphones, cameras, camcorders, etc. directly generate a bitstream, the encoding server may be omitted.

The bitstream may be generated by an encoding method or a bitstream generating method to which the embodiment(s) of the present document is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server delivers it to a streaming server, and the streaming server transmits multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (ex. smartwatches, smart glasses, head mounted displays), digital TVs, desktops computer, digital signage, and the like.

Each server in the content streaming system may be operated as a distributed server, in which case data received from each server may be distributed.

**Claims**

1. An image decoding method performed by a decoding apparatus, comprising:

   deriving quantized transform coefficients for a current block from a bitstream;
   deriving transform coefficients by performing a dequantization based on the quantized transform coefficients;
   deriving residual samples for the current block by performing an inverse transform based on the transform coefficients; and
   generating a reconstructed picture based on the residual samples,
   wherein the inverse transform is performed by obtaining information for Multiple Transform Selection (MTS) from the bitstream and using a transform kernel set derived based on the information for MTS.

2. The method of claim 1, wherein the information for MTS includes MTS index information for indicating an MTS candidate applied to the current block among a plurality of MTS candidates, and
   wherein the inverse transform is performed by using a vertical transform kernel and a horizontal transform kernel included in the transform kernel set represented by the MTS candidate which is indicated by the MTS index information.

3. The method of claim 2, wherein the plurality of MTS candidates represents multiple transform kernel sets,
   wherein the multiple transform kernel sets are derived by combining a transform kernel type corresponding to the vertical transform kernel and a transform kernel type corresponding to the horizontal transform kernel, and
   wherein the transform kernel type corresponding to the vertical transform kernel is one of a plurality of transform kernel types, and the transform kernel type corresponding to the horizontal transform kernel is one of the plurality of transform kernel types.

4. The method of claim 3, wherein the plurality of transform kernel types includes a first transform kernel type and a second transform kernel type, and
   wherein the MTS index information is defined as an index value indicating at least one of:

   an MTS candidate including the vertical transform kernel and the horizontal transform kernel that correspond to the first transform kernel type,
   an MTS candidate including the vertical transform kernel that corresponds to the first transform kernel type and the horizontal transform kernel that correspond to the second transform kernel type,
   an MTS candidate including the vertical transform kernel that corresponds to the second transform kernel type and the horizontal transform kernel that corresponds to the first transform kernel type, and
an MTS candidate including the vertical transform kernel and the horizontal transform kernel that correspond to the second transform kernel type.

5. The method of claim 4, wherein the first transform kernel type and the second transform kernel type are transform kernel types that correspond to a predetermined transform matrix.

6. The method of claim 4, wherein the first transform kernel type is discrete sine transform (DST) type 7, and wherein the second transform kernel type is discrete cosine transform (DCT) type 8.

7. The method of claim 2, wherein, when a prediction mode of the current block is a non-directional mode and the MTS index information indicates a first index value, the transform kernel type corresponding to the vertical transform kernel is DST type 7, and the transform kernel type corresponding to the horizontal transform kernel is DST type 7, wherein, when a prediction mode of the current block is a non-directional mode and the MTS index information indicatesa second index value, the transform kernel type corresponding to the vertical transform kernel is DST type 7, and the transform kernel type corresponding to the horizontal transform kernel is DCT type 8, wherein, when a prediction mode of the current block is a non-directional mode and the MTS index information indicatesa third index value, the transform kernel type corresponding to the vertical transform kernel is DCT type 8, and the transform kernel type corresponding to the horizontal transform kernel is DST type 7, and wherein, when a prediction mode of the current block is a non-directional mode and the MTS index information indicatesa fourth index value, the transform kernel type corresponding to the vertical transform kernel is DCT type 8, and the transform kernel type corresponding to the horizontal transform kernel is DCT type 8.

8. The method of claim 2, wherein the information for MTS includes MTS flag information for indicatingwhether an inverse transform is performed based on the MTS for the current block, wherein, when the MTS flag information indicates 1, the information for MTS includes the MTS index information.

9. The method of claim 2, wherein the information for MTS includes MTS intra availability flag information for indicatingwhether the MTS based inverse transform is available for an intra coding block and MTS inter availability flag information for indicatingwhether the MTS based inverse transform is available for an inter coding block, and wherein the MTS intra availability flag information and the MTS inter availability flag information are signaled in a sequence parameter set (SPS) level.

10. The method of claim 9, wherein, when the MTS intra availability flag information is equal to 0 and a prediction mode of the current block is an intra prediction mode, both of the transform kernel type for the horizontal transform kernel of the current block and the transform kernel type for the vertical transform kernel of the current block are DCT type 2, and wherein, when the MTS inter availability flag information is equal to 0 and a prediction mode of the current block is an inter prediction mode, both of the transform kernel type for the horizontal transform kernel of the current block and the transform kernel type for the vertical transform kernel of the current block are DCT type 2.

11. An image encoding method performed by an encoding apparatus, comprising
deriving residual samples for a current block;
deriving transform coefficients for the current block by performing a transform based on the residual samples;
deriving quantized transform coefficients by performing a quantization based on the transform coefficients;
generating residual information based on the quantized transform coefficients; and
encoding image information including the residual information,
wherein the transform is performed by using a transform kernel set applied to the current block,
wherein information for Multiple Transform Selection (MTS) that represents the transform kernel set is generated, and
wherein the information for MTS is included in the imageinformation.

12. The method of claim 11, wherein the information for MTS includes MTS index information for indicating an MTS candidate applied to the current block among a plurality of MTS candidates, and
wherein the transform is performed by using a vertical transform kernel and a horizontal transform kernel included in the transform kernel set represented by the MTS candidate which is indicated by the MTS index information.

13. The method of claim 12, wherein the plurality of MTS candidates represents multiple transform kernel sets,
wherein the multiple transform kernel sets are derived by combining a transform kernel type corresponding to the vertical transform kernel and a transform kernel type corresponding to the horizontal transform kernel, and wherein the transform kernel type corresponding to the vertical transform kernel is one of a plurality of transform kernel types, and the transform kernel type corresponding to the horizontal transform kernel is one of the plurality of transform kernel types.

14. The method of claim 12, wherein, when a prediction mode of the current block is a non-directional mode and the MTS index information indicates a first index value, the transform kernel type corresponding to the vertical transform kernel is DST type 7, and the transform kernel type corresponding to the horizontal transform kernel is DST type 7, wherein, when a prediction mode of the current block is a non-directional mode and the MTS index information indicates a second index value, the transform kernel type corresponding to the vertical transform kernel is DST type 7, and the transform kernel type corresponding to the horizontal transform kernel is DCT type 8, wherein, when a prediction mode of the current block is a non-directional mode and the MTS index information indicates a third index value, the transform kernel type corresponding to the vertical transform kernel is DCT type 8, and the transform kernel type corresponding to the horizontal transform kernel is DST type 7, and wherein, when a prediction mode of the current block is a non-directional mode and the MTS index information indicates a fourth index value, the transform kernel type corresponding to the vertical transform kernel is DCT type 8, and the transform kernel type corresponding to the horizontal transform kernel is DCT type 8.

15. The method of claim 12, wherein the information for MTS includes MTS intra availability flag information for indicatingwhether the MTS based inverse transform is available for an intra coding block and MTS inter availability flag information for indicatingwhether the MTS based inverse transform is available for an inter coding block, and wherein the MTS intra availability flag information and the MTS inter availability flag information are signaled in a sequence parameter set (SPS) level.

# FIG. 1

# FIG. 2

EP 3 836 543 A1

# FIG. 3

EP 3 836 543 A1

# FIG. 4

Residual samples → **Primary transform (separable transform)** [S410] → Transform coefficients (1st) → **Secondary transform (non-separable secondary transform)** [S420] → Transform coefficients (2nd)

Transformer

Transform coefficients (2nd) → **Secondary (inverse) transform (non-separable secondary transform)** [S450] → Transform coefficients (1st) → **Primary (inverse) transform (separable transform)** [S460] → Residual samples

Inverse transformer

EP 3 836 543 A1

# FIG. 5

```
        ┌─────────────────────┐
        │  Parse EMT_CU_Flag  │── S500
        │      (1 bits)       │
        └─────────────────────┘
                   │
                   ▼
          ╱─────────────────╲  S510
    NO  ╱                     ╲  YES
  ◄────◄   EMT_CU_Flag=1?      ►────►
        ╲                     ╱
          ╲─────────────────╱
     │                              │
     ▼                              ▼
┌──────────────┐          ╱─────────────────╲  S520
│(DCT-2, DCT-2)│    NO  ╱                     ╲  YES
└──────────────┘  ◄────◄  #of NZ coeff. > 2?  ►────►
  S515            ╲                     ╱
                    ╲─────────────────╱
                  │                        │
                  ▼                        ▼
         ┌──────────────┐        ┌─────────────────┐
         │(DCT-7, DCT-7)│        │ Parse EMT_TU_Idx│── S530
         └──────────────┘        │     (2 bits)    │
          S525                   └─────────────────┘
                                          │
                                          ▼
                                 ┌─────────────────┐
                                 │ (Hor., Ver.) from│── S535
                                 │    the tables    │
                                 └─────────────────┘
```

EP 3 836 543 A1

# FIG. 6

$$t_m = x_m \cos\theta - x_n \sin\theta$$
$$t_n = x_m \sin\theta + x_n \cos\theta$$

FIG. 7

# FIG. 8

Reduced
Transform

Residual → [ T x [] ] → Coefficient

Reduced Inv.
Transform

Coefficient → [ T$^t$ x [] ] → Residual

# FIG. 9

# FIG. 10

| 1 | 3 | 6 | 10 |
|---|---|---|----|
| 2 | 5 | 9 | 13 |
| 4 | 8 | 12 | 15 |
| 7 | 11 | 14 | 16 |

(a)

| 1 | 2 | 3 | 4 |
|---|---|---|---|
| 5 | 6 | 7 | 8 |
| 9 | 10 | 11 | 12 |
| 13 | 14 | 15 | 16 |

(b)

| 1 | 5 | 9 | 13 |
|---|---|---|----|
| 2 | 6 | 10 | 14 |
| 3 | 7 | 11 | 15 |
| 4 | 8 | 12 | 16 |

(c)

# FIG. 11

| | | | |
|---|---|---|---|
| 1 | 3 | 6 | |
| 2 | 5 | | |
| 4 | 8 | | |
| 7 | | | |
| 1 | 3 | 6 | |
| 2 | 5 | | |
| 4 | 8 | | |
| 7 | | | |

# FIG. 12

(a)

(b)

# FIG. 13

```
┌────────────────────────────────────────┐
│   Derive residual samples for a current block   │────S1300
└────────────────────────────────────────┘
                    │
                    ▼
┌────────────────────────────────────────┐
│        Derive transform coefficients for        │
│  the current block by performing a transform   │────S1310
│          based on the residual samples          │
└────────────────────────────────────────┘
                    │
                    ▼
┌────────────────────────────────────────┐
│   Deriving quantized transform coefficients     │
│       by performing quantization based on       │────S1320
│            the transform coefficients           │
└────────────────────────────────────────┘
                    │
                    ▼
┌────────────────────────────────────────┐
│    Generate residual information based on       │
│       the quantized transform coefficients      │────S1330
└────────────────────────────────────────┘
                    │
                    ▼
┌────────────────────────────────────────┐
│     Encode image information including          │
│           the residual information              │────S1340
└────────────────────────────────────────┘
```

# FIG. 14

Derive quantized transform coefficients
for a current block from a bitstream — S1400

Derive transform coefficients by performing
a dequantization based on
the quantized transform coefficients — S1410

Derive residual samples for the current block
by performing an inverse transform
based on the transform coefficients — S1420

Generate a reconstructed picture
based on the residual samples — S1430

# FIG. 15

User Equipment

Game console

Wired/Wireless communication

Web Server

PC

Smart Phone

Realtime transmission

Wired/Wireless communication

Encoding Server

Streaming Server

Settop box

Camcoder/Camera

Media storage

Smart Phone

EP 3 836 543 A1

# INTERNATIONAL SEARCH REPORT

| | International application No. |
|---|---|
| | **PCT/KR2019/011270** |

| A. CLASSIFICATION OF SUBJECT MATTER |
|---|
| *H04N 19/12(2014.01)i, H04N 19/61(2014.01)i, H04N 19/124(2014.01)i, H04N 19/132(2014.01)i, H04N 19/184(2014.01)i, H04N 19/70(2014.01)i* |
| According to International Patent Classification (IPC) or to both national classification and IPC |

| B. FIELDS SEARCHED |
|---|
| Minimum documentation searched (classification system followed by classification symbols) |
| H04N 19/12; H04N 19/119; H04N 19/124; H04N 19/129; H04N 19/18; H04N 19/61; H04N 19/132; H04N 19/184; H04N 19/70 |
| Documentation searched other than minimum documentation to the extent that such documents are included in the fields searched Korean utility models and applications for utility models: IPC as above Japanese utility models and applications for utility models: IPC as above |
| Electronic data base consulted during the international search (name of data base and, where practicable, search terms used) eKOMPASS (KIPO internal) & Keywords: Multiple Transform Selection(MTS), inverse transform, transform coefficient, quantization, decoding |

| C. DOCUMENTS CONSIDERED TO BE RELEVANT |
|---|

| Category* | Citation of document, with indication, where appropriate, of the relevant passages | Relevant to claim No. |
|---|---|---|
| Y | WO 2018-097691 A2 (ELECTRONICS AND TELECOMMUNICATIONS RESEARCH INSTITUTE) 31 May 2018 See paragraphs [0087], [0109]; and claim 1. | 1-15 |
| Y | CHEN, Jianle et al. Algorithm description for Versatile Video Coding and Test Model 2 (VTM 2). Joint Video Experts Team (JVET) of ITU-T SG 16 WP 3 and ISO/IEC JTC 1/SC 29/WG 11. JVET-K1002_v2. 11th Meeting: Ljubljana, SI. pages 1-21, 18 July 2018 [retrieved on 10 November 2019]. Retrieved from [URL: http://phenix.int-evry.fr/jvet/]. See pages 19-21; and tables 3-6. | 1-15 |
| A | CHIANG, Man-shu et al. CE6.1.10 & CE6.3.4: AMT simplification and improvement. Joint Video Experts Team (JVET) of ITU-T SG 16 WP 3 and ISO/IEC JTC 1/SC 29/WG 11. JVET-K0250_v1. 11th Meeting. Ljubljana, SI. pages 1-10, 18 July 2018 [retrieved on 10 November 2019]. Retrieved from [URL: http://phenix.int-evry.fr/jvet/]. See pages 2-3; and tables 1-2. | 1-15 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 DECEMBER 2019 (12.12.2019) | **12 DECEMBER 2019 (12.12.2019)** |

| Name and mailing address of the ISA/KR Korean Intellectual Property Office Government Complex Daejeon Building 4, 189, Cheongsa-ro, Seo-gu, Daejeon, 35208, Republic of Korea Facsimile No. +82-42-481-8578 | Authorized officer Telephone No. |
|---|---|

Form PCT/ISA/210 (second sheet) (January 2015)

**EP 3 836 543 A1**

## INTERNATIONAL SEARCH REPORT

| International application No. |
|---|
| PCT/KR2019/011270 |

C (Continuation). DOCUMENTS CONSIDERED TO BE RELEVANT

| Category* | Citation of document, with indication, where appropriate, of the relevant passages | Relevant to claim No. |
|---|---|---|
| A | CHEN, Jianle et al. Algorithm Description of Joint Exploration Test Model 7 (JEM 7). Joint Video Exploration Team (JVET) of ITU-T SG 16 WP 3 and ISO/IEC JTC 1/SC 29/WG 11. JVET-G1001. 7th Meeting. Torino, IT. pages 1-44, 21 July 2017 [retrieved on 10 November 2019]. Retrieved from [URL: http://phenix.int-evry.fr/jvet/]. See pages 29-30; and tables 6-7. | 1-15 |
| A | KR 10-2018-0041578 A (INDUSTRY ACADEMY COOPERATION FOUNDATION OF SEJONG UNIVERSITY) 24 April 2018 See paragraphs [0061], [0076], [0098], [0169]; claims 3-8; and figure 10. | 1-15 |

Form PCT/ISA/210 (continuation of second sheet) (January 2015)

**INTERNATIONAL SEARCH REPORT**

Information on patent family members

International application No.

**PCT/KR2019/011270**

| Patent document cited in search report | Publication date | Patent family member | Publication date |
|---|---|---|---|
| WO 2018-097691 A2 | 31/05/2018 | CN 110024399 A<br>KR 10-2018-0061046 A<br>US 2019-0313102 A1 | 16/07/2019<br>07/06/2018<br>10/10/2019 |
| KR 10-2018-0041578 A | 24/04/2018 | CN 109845256 A<br>WO 2018-070788 A1 | 04/06/2019<br>19/04/2018 |

Form PCT/ISA/210 (patent family annex) (January 2015)